(19) Europäisches Patentamt
European Patent Office
Office européen des brevets

(11) **EP 3 322 573 B1**

(12) **EUROPÄISCHE PATENTSCHRIFT**

(45) Veröffentlichungstag und Bekanntmachung des Hinweises auf die Patenterteilung:
**24.06.2020 Patentblatt 2020/26**

(21) Anmeldenummer: **16739077.2**

(22) Anmeldetag: **08.07.2016**

(51) Int Cl.:
*B29C 64/153* (2017.01)      *B29C 64/165* (2017.01)
*B29C 64/386* (2017.01)      *B29C 64/343* (2017.01)
*B22F 3/105* (2006.01)

(86) Internationale Anmeldenummer:
**PCT/EP2016/066336**

(87) Internationale Veröffentlichungsnummer:
**WO 2017/009249 (19.01.2017 Gazette 2017/03)**

(54) **VERFAHREN UND VORRICHTUNG ZUR BAUMATERIALDOSIERUNG IN EINEM GENERATIVEN FERTIGUNGSVERFAHREN**

METHOD AND DEVICE FOR METERING BUILDING MATERIAL IN A GENERATIVE PRODUCTION METHOD

PROCÉDÉ ET DISPOSITIF POUR LE DOSAGE DE MATÉRIAU DE CONSTRUCTION DANS UN PROCÉDÉ DE FABRICATION GÉNÉRATIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.07.2015 DE 102015213106**

(43) Veröffentlichungstag der Anmeldung:
**23.05.2018 Patentblatt 2018/21**

(73) Patentinhaber: **EOS GmbH Electro Optical Systems**
**82152 Krailling (DE)**

(72) Erfinder:
• **DANZIG, André**
  **88161 Lindenberg (DE)**
• **SALZBERGER, Rainer**
  **84172 Buch am Erlbach (DE)**
• **PHILIPPI, Jochen**
  **82166 Gräfelfing (DE)**
• **BAUMANN, Andreas**
  **82166 Gräfelfing (DE)**
• **CANTZLER, Gerd**
  **82061 Neuried (DE)**
• **JELIN, Robert**
  **82407 Wielenbach (DE)**

(74) Vertreter: **Prüfer & Partner mbB**
**Patentanwälte · Rechtsanwälte**
**Sohnckestraße 12**
**81479 München (DE)**

(56) Entgegenhaltungen:
WO-A1-2008/120183        WO-A1-2014/012764
DE-A1-102007 006 478     DE-C1- 19 530 295

EP 3 322 573 B1

**Beschreibung**

Die vorliegende Anmeldung bezieht sich auf eine Herstellvorrichtung zur generativen schichtweisen Fertigung von dreidimensionalen Objekten sowie auf eine entsprechend angepasste Dosiervorrichtung. Insbesondere bezieht sich die vorliegende Erfindung auf Vorrichtungen und Verfahren, in denen das Baumaterial in Pulverform vorliegt.

Bei einem Verfahren zum generativen schichtweisen Herstellen von dreidimensionalen Objekten wird üblicherweise eine Baumaterialschicht in einer Baukammer auf einem höhenverfahrbaren Träger aufgetragen und selektiv verfestigt. Dieser Vorgang wird durch wiederholtes Auftragen und Verfestigen von Schichten solange fortgeführt, bis durch die selektive Verfestigung der aufeinandergestapelten Schichten das dreidimensionale Objekt fertiggestellt wurde.

DE 10 2011 121 568 A1 beschreibt ein generatives Schichtbauverfahren, bei dem ein pulverförmiges Metallmaterial mittels elektromagnetischer Strahlung oder Elektronenstrahlung selektiv verfestigt wird. Insbesondere widmet sich DE 10 2011 121 568 A1 dem Problem, dass der Pulverauftrag normalerweise immer über der gesamten Fläche der vorhandenen Baukammer stattfindet. Dies führt zum Einen zu einem verlängerten Herstellungszeitraum, weil eine großflächige Schicht aufgetragen wird, selbst wenn nur ein kleiner Bruchteil dieser Schicht tatsächlich verfestigt wird. Weiterhin gibt es auch den Nachteil, dass große Pulvermengen verbraucht werden, obwohl nur ein Bruchteil des Pulvers tatsächlich verfestigt wird.

Ein hoher Pulververbrauch ist aus mehreren Gründen von Nachteil. Sieht man einmal von den dadurch entstehenden hohen Baumaterialkosten ab, so gibt es auch den Nachteil, dass weitere Ressourcen, beispielsweise die Pulverhandhabungssysteme (Siebe, Fördersysteme) durch den häufigeren Gebrauch einem erhöhten Verschleiß ausgesetzt sind. Insbesondere wenn sehr hohe Objekte gebaut werden, kann durch notwendig werdende Pulvernachfüllvorgänge die Bauzeit verlängert werden. Schlimmstenfalls ist die Bauhöhe der herzustellenden Objekte begrenzt, falls ein Pulvernachfüllvorgang unzweckmäßig ist. Eine Wiederverwendung von unverfestigtem Pulver, das bereits einmal in einer Vorrichtung zur generativen schichtweisen Fertigung verwendet wurde, ist nur in beschränktem Maße möglich, da das Pulver in der Vorrichtung altert. DE 10 2007 006 478 A1 beschreibt eine Dosiervorrichtung zur Verwendung in einer Herstellungsvorrichtung zur Herstellung eines dreidimensionalen Objekts.

Zur Lösung der genannten Probleme schlägt DE 10 2011 121 568 A1 vor, innerhalb der Baukammer eine Bauzelle aufzubauen, die das zu bauende Objekt eng umgibt. Gleichzeitig wird der Beschichter seitlich begrenzt, so dass nur der Bereich innerhalb der Bauzelle beschichtet wird. Insbesondere wird die Bauzellenwandung aus dem für den Bauvorgang verwendeten Aufbaumaterial durch selektive Verfestigung sukzessive aufgebaut. Dies macht es möglich, die seitliche Lage der Bauzellenwandung von Schicht zu Schicht zu variieren und an den jeweiligen Objektquerschnitt in einer Schicht anzupassen.

Auch wenn das in DE 10 2011 121 568 A1 beschriebene Verfahren sicherlich zu einer Pulvereinsparung führen kann, so führt das Vorhandensein von zusätzlichen Wandungen aus dem verfestigten Baumaterial dazu, dass der Auspackvorgang für die fertiggestellten Objekte (das Befreien der Objekte von dem sie umgebenden unverfestigten Pulver) erschwert wird. Die Aufgabe der vorliegenden Erfindung ist es daher, ein Verfahren und eine Vorrichtung bereitzustellen, die eine alternative Optimierung der Pulverdosierung erlauben, ohne zwangsläufige Inkaufnahme des Vorhandenseins von aus dem Baumaterial gefertigten, nicht zum Objekt gehörenden, Begrenzungswänden.

Die Aufgabe wird gelöst durch eine Dosiervorrichtung nach Anspruch 1 und durch eine Herstellvorrichtung nach Anspruch 10. Weiterbildungen der Erfindung sind in den abhängigen Ansprüchen beschrieben.

Merkmale und Zweckmäßigkeiten der Erfindung werden nachfolgend anhand von Ausführungsbeispielen unter Bezugnahme auf die Zeichnungen beschrieben.

Fig. 1      ist eine Darstellung einer erfindungsgemäßen Vorrichtung zur Durchführung eines generativen Schichtbauverfahrens.

Fig. 2      ist eine Draufsicht auf die Bauebene der in Fig. 1 schematisch dargestellten Vorrichtung.

Fig. 3      zeigt eine seitliche Schnittansicht des herzustellenden Objekts in Höhe der Bauebene während des Herstellvorgangs.

Fig. 4a     und 4b zeigen Draufsichten auf das Baufeld zur Erläuterung eines Verfahrens nach der ersten Ausführungsform.

Fig. 5      zeigt eine weitere Draufsicht auf das Baufeld zur Erläuterung des Verfahrens der ersten Ausführungsform.

Fig. 6      zeigt eine Draufsicht auf das Baufeld zur Erläuterung des Verfahrens nach der zweiten Ausführungsform.

Fig. 7      zeigt einen seitlichen Schnitt mit einem bei der vierten Ausführungsform verwendeten Beschichter.

Fig. 8      zeigt eine Ausführungsform eines Beschichters gemäß der vierten Ausführungsform bei Betrachtung schräg von oben, also aus der gleichen seitlichen Betrachtungsposition wie in Fig. 7, jedoch mit einem erhöhten Standort des Betrachters.

Fig. 9      zeigt eine besondere Abwandlung einer Pulverzuführvorrichtung des Beschichters von Fig. 8 im Querschnitt.

Fig. 10     zeigt eine Variation der besonderen Abwandlung von Fig. 9 im Querschnitt,

Fig. 11     zeigt eine weitere Variation der besonderen Abwandlung von Fig. 9 im Querschnitt.

Fig. 12    zeigt noch eine weitere Variation der besonderen Abwandlung von Fig. 9 im Querschnitt.

Fig. 13    zeigt schematisch noch eine weitere Möglichkeit einer besonderen Abwandlung der Pulverzuführvorrichtungen des Beschichters von Fig. 8 in der Draufsicht.

Erste Ausführungsform

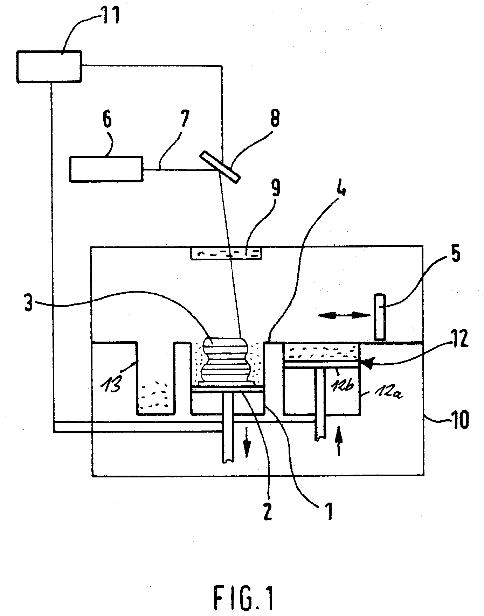

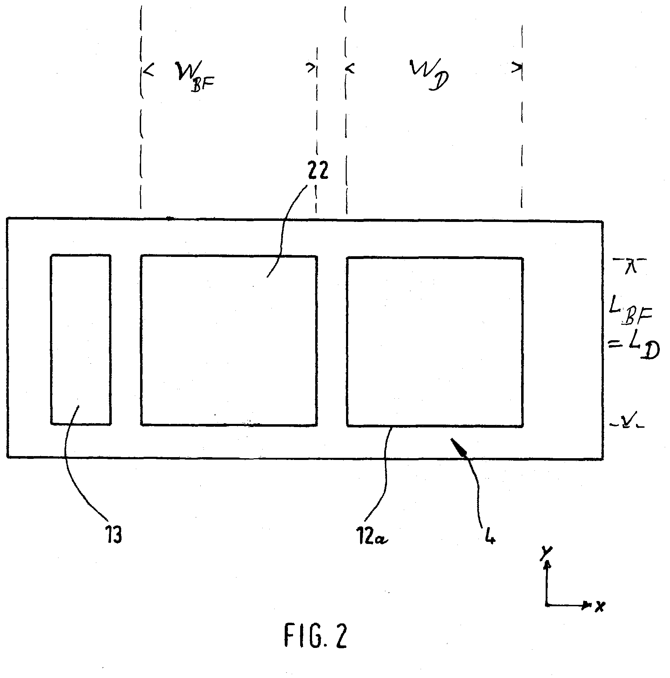

Zunächst wird eine zur Durchführung eines Herstellverfahrens geeignete generative Fertigungsvorrichtung beschrieben. Fig. 1 zeigt in schematischer Weise eine Lasersinter- bzw. schmelzvorrichtung als Beispiel solch einer Vorrichtung zum schichtweisen Herstellen eines dreidimensionalen Objekts mittels eines generativen Fertigungsverfahrens. Die Vorrichtung weist einen nach oben hin offenen Baubehälter 1 auf, dem das Aufbaumaterial für den schichtweisen Herstellungsvorgang zugeführt wird und der das Baumaterial während des schichtweisen Herstellungsvorgangs seitlich umgibt. Ein in vertikaler Richtung bewegbarer Träger 2 trägt eine Bauplattform, welche wiederum das zu bildende Objekt 3 trägt. Optional kann auch auf die Bauplattform verzichtet werden. Durch die horizontalen Abmessungen des Baubehälters 1 wird ein Baufeld 22 (siehe Fig. 2) definiert. Dieses kann jedoch auch analog zu DE 10 2011 121 568 A1 verkleinert werden. Der Träger 2 wird in der Höhe so eingestellt, dass die jeweils zu verfestigende Schicht des Objekts 3 in einer Bauebene 4 liegt. Weiter ist ein Beschichter 5 zum Aufbringen des durch elektromagnetische Strahlung oder Teilchenstrahlung verfestigbaren pulverförmigen Aufbaumaterials auf bereits verfestigte Schichten des Objekts 3 oder, zu Beginn des Bauvorgangs, die Bauplattform selbst vorgesehen. Ein in Fig. 1 gezeigtes für die Pulververfestigung verwendetes Belichtungssystem weist als Quelle der elektromagnetischen Strahlung einen Laser 6 auf. Ein weiterer Bestandteil des Belichtungssystems ist eine Ablenkvorrichtung 8, durch die ein mittels des Lasers 6 erzeugter Laserstrahl 7 auf ein Einkoppelfenster 9 gelenkt wird, von welchem der Strahl in die Prozesskammer 10 eindringt und einen vorbestimmten Punkt in der Bauebene 4 trifft. Die Prozesskammer 10 ist bevorzugt mit einem Schutzgas flutbar zur Vermeidung von Reaktionen des Pulvers mit der Umgebungsatmosphäre.

Weiterhin umfasst die Vorrichtung eine Steuereinheit 11, über welche die Ablenkeinrichtung 8, die Vertikalbewegung des Trägers 2, der Beschichter 5 und ein höhenverfahrbarer (Zuführ)-Stempel 12b in einem Dosierbehälter 12a in koordinierter Weise zum Durchführen des Bauprozesses gesteuert werden. Gegebenenfalls kann die Steuereinheit 11 auch noch weitere Bestandteile der Vorrichtung steuern. Insbesondere hat die Steuereinheit 11 Zugriff auf CAD-Daten des herzustellenden Objekts, welche als Grundlage für die Steuerung dienen.

Als pulverförmiges Aufbaumaterial können alle für ein generatives Schichtbauverfahren, insbesondere für ein Lasersinter- oder -schmelzverfahren geeigneten Pulver bzw. Pulvermischungen zum Einsatz kommen. Insbesondere zählt dazu Metallpulver, z.B. Edelstahlpulver. Darüber hinaus ist das erfindungsgemäße Verfahren in gleicher Weise bei Verwendung von Kunststoffpulver oder Keramikpulver bzw. kunststoffbeschichtetem Sand einsetzbar.

Der Betrieb der Lasersintervorrichtung erfolgt dergestalt, dass der Beschichter 5 über das Baufeld fährt und eine Pulverschicht mit einer vorbestimmten Dicke d2 aufbringt. Anschließend wird mit dem Laserstrahl 7 der Querschnitt des Objekts 3 in der jeweiligen Schicht bestrahlt, woraufhin das Pulver zumindest teilweise aufschmilzt und sich beim nachfolgenden Abkühlen verfestigt. Mit zumindest teilweisem Aufschmelzen ist gemeint, dass die Pulverpartikel zumindest lediglich oberflächlich, wenn gewünscht aber auch vollständig aufschmelzen. Auch ein ledigliches Erweichen der Pulverkörner, das beim nachfolgenden Abkühlen ebenfalls zu einer Verbindung derselben zu einem Festkörper führt, wäre möglich. Danach wird der Träger um einen Betrag d2 abgesenkt und eine neue Pulverschicht der Dicke d2 aufgebracht. Die Herstellung des Objekts 3 erfolgt auf diese Weise Schicht für Schicht. Nach Fertigstellung wird das Objekt 3 entnommen und ggf. nachbehandelt und/oder einer Qualitätskontrolle unterzogen.

Wie in Fig. 1 gezeigt, befindet sich das für einen Beschichtungsvorgang zur Verfügung stehende pulverförmige Baumaterial in einem Dosierbehälter 12a neben dem Baubehälter 1. Durch Anheben des Stempels 12b im Dosierbehälter 12a wird Pulvermaterial nach oben geschoben, welches dann von dem Beschichter 5 auf das Baufeld geschoben werden kann und dort verteilt werden kann. Die zur Verfügung gestellte Pulvermenge lässt sich dabei über die Höhendifferenz $S_D$, um die der Stempel 12b in dem Dosierbehälter 12 nach oben bewegt wird, steuern. Mit anderen Worten, der Stempel 12b und der Dosierbehälter 12a wirken als Dosiervorrichtung 12 zur Bemessung der für einen Schichtauftrag zu verwendenden Pulvermenge zusammen.

Fig. 2 zeigt eine Draufsicht auf die Bauebene 4 der Vorrichtung in Fig. 1. Man erkennt neben dem Baufeld 22 den Dosierbehälter 12a und, mit dem Bezugszeichen 13 versehen, einen Überlaufbehälter, in welchen durch den in Fig. 2 nicht gezeigten Beschichter 5 überschüssiges Baumaterial nach einem Schichtauftrag geschoben wird. Der Beschichter 5 würde sich also in Fig. 2 von rechts nach links bewegen.

In Fig. 2 sind Länge $L_D$ und Breite $W_D$ des Dosierbehälters 12a bzw. Zuführstempels 12b gleich der Länge $L_{BF}$ bzw. Breite $W_{BF}$ des Baufelds 22. Dies muss zwar nicht so sein, allerdings macht es zumindest Sinn, wenn die Länge $L_D$ des Dosierbehälters gleich der Länge $L_{BF}$ des Baufelds ist, da ansonsten möglicherweise Pulver durch den Beschichter 5 neben das Baufeld geschoben wird. Wie bereits erwähnt, wird in Fig. 2 der Beschichter 5 in Richtung der Breite $W_{BF}$ des Baufelds 22 verfahren.

Soll die Pulvermenge P1 zum Auftrag einer Schicht mit der Dicke d2 bereitgestellt werden, so muss hierfür in erster Näherung der Stempel im Dosierbehälter um die Strecke $S_D = d2 * (W_{BF} * L_{BF}) / (W_D * L_D)$ nach oben verfahren werden.

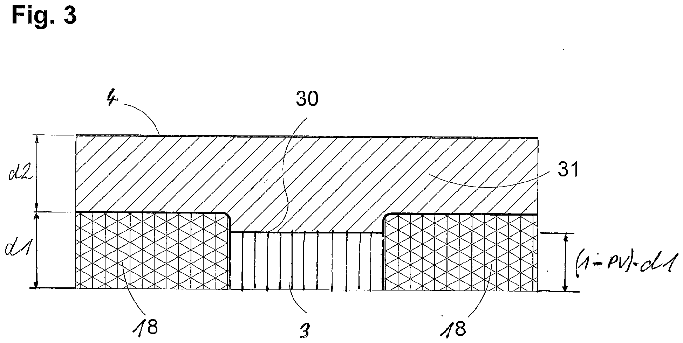

Die vorliegende Erfindung berücksichtigt, dass die für die Herstellung eines Objektquerschnitts benötigte Pulvermenge nicht alleine von der vorbestimmten Dicke d2, mit der eine Pulverschicht aufgebracht wird, abhängt. Dies wird unter Bezugnahme auf Fig. 3 veranschaulicht:

Fig. 3 zeigt eine seitliche Ansicht des Objekts 3 während des Bauvorgangs. Im Einzelnen ist die aktuell oberste Schicht des Objekts 3 gezeigt, die bereits verfestigt wurde und links und rechts durch unverfestigtes pulverförmiges Aufbaumaterial 18, nachfolgend kurz als "Pulvermaterial" bezeichnet, flankiert ist. In dem in Fig. 3 gezeigten Zustand wurde bereits eine neue Pulvermaterialschicht 31 mittels des Beschichters 5 auf die im Bereich des Objekts 3 verfestigte vorangehende Schicht aufgetragen, d.h. der Beschichtungsvorgang ist bereits abgeschlossen.

Wie man in Fig. 3 deutlich erkennt, liegt die Oberfläche des Objekts 3 unterhalb jener des unverfestigt gebliebenen Pulvers 18, so dass an dieser Stelle eine Einsenkung 30 ausgebildet ist. Die Ursache hierfür ist die Materialverdichtung durch den bereits weiter oben erwähnten Aufschmelz- bzw. Erweichungsvorgang des Pulvers.

Wie man ebenfalls in Fig. 3 erkennt, muss im Bereich der Einsenkung 30 mehr Pulver aufgetragen werden. An dieser Stelle ist die Dicke der neuen Pulverschicht 31 gleich d2 + d1 * PV. Die Größe d1 soll hierbei die Dicke der vorangegangenen Pulverschicht, bevor sie verfestigt wird, bezeichnen. Der Pulververdichtungsfaktor PV soll charakterisieren, um welchen Prozentsatz sich die Dicke der vorangehenden Schicht durch die Verfestigung verringert hat. Es sei noch angemerkt, dass man in erster Näherung davon ausgehen kann, das d1 gleich d2 ist. Allerdings könnte es sein, dass eine gerade aufgetragene Schicht durch thermische Vorgänge oder Absetzvorgänge eine geringfügig von d2 unterschiedliche Dicke aufweist, obwohl sie mit der Dicke d2 aufgetragen wurde. Dies soll durch die Einführung der Größe d1 berücksichtigt werden.

Im Grunde genommen kann die zur Kompensierung des Schwunds beim Verfestigen zusätzlich benötigte Pulvermenge P2 pauschal einfach dadurch berücksichtigt werden, dass die für die Beschichtung des gesamten Baufelds mit einer intendierten Dicke d2 erforderliche Pulvermenge P1 um einen fixen Sicherheitsbetrag erhöht wird. Bei der von der Anmelderin bisher angewandten Vorgehensweise wird demgegenüber die für die Kompensierung des Schwunds benötigte zusätzliche Pulvermenge P2 nicht für jede Schicht gleich gewählt, sondern je nach Bedarf gewählt:

Die zusätzlich benötigte Pulvermenge P2 ist abhängig von der Fläche A des zuletzt verfestigten Objektquerschnitts. Bei der von der Anmelderin bisher angewandten Vorgehensweise greift deshalb die Steuereinheit 11 vor dem Auftrag einer neuen Pulverschicht auf die CAD-Daten des herzustellenden Objekts zu und ermittelt die Fläche A des verfestigten Bereichs in der zuletzt aufgetragenen Pulverschicht. Basierend auf dieser Fläche A wird dann die zusätzlich für die Kompensation des Schwunds benötigte Pulvermenge für den Schichtauftrag bereitgestellt.

Obwohl bei einem Vorgehen gemäß der von der Anmelderin bisher angewandten Vorgehensweise bereits eine Optimierung des Pulvereinsatzes möglich ist, kann gemäß dem Verfahren nach der ersten Ausführungsform der Pulververbrauch noch weiter optimiert werden:

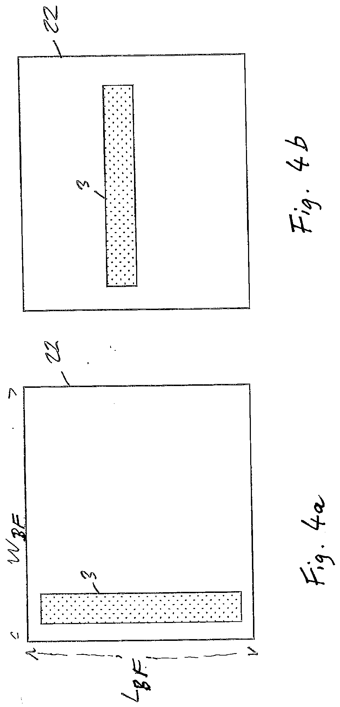

Die Erfinder sind dabei von der Überlegung ausgegangen, dass die Orientierung der zuletzt belichteten Fläche im Baufeld die zur Kompensierung der Pulververdichtung in der belichteten Fläche zusätzlich benötigte Pulvermenge beeinflusst. Dies soll an Fig. 4a und 4b veranschaulicht werden. In beiden Figuren erfolgt ein Schichtauftrag auf der dargestellten Fläche des Baufelds 22 jeweils in horizontaler Richtung. Der in der vorangegangenen Schicht verfestigte Querschnitt des Objekts 3 ist der Einfachheit halber als lang gestrecktes Rechteck gezeigt. Obwohl in Fig. 4a und 4b die Fläche des zuletzt verfestigten Bauteilquerschnitts gleich ist, wird bei der Lage des Querschnitts in Fig. 4b deutlich mehr Pulver zum Ausgleich des Schwunds infolge der Pulververdichtung benötigt:

In Fig. 4a wird die zusätzlich benötigte Pulvermenge über die gesamte Länge $L_{BF}$ des Baufelds in den zuletzt verfestigten Querschnittsbereich gefüllt. In Fig. 4b wird demgegenüber die zusätzliche Pulvermenge nicht entlang der gesamten Länge $L_{BF}$ des Baufelds benötigt, oberhalb und unterhalb des Objektquerschnitts 3 in Fig. 4b wird keine zusätzliche Pulvermenge benötigt. Dennoch wird auch in diesen Bereichen mehr Pulver aufgetragen, da der Zuführstempel 12b im Dosierbehälter 12a die zusätzliche Pulvermenge P2 nur einheitlich entlang der gesamten Länge $L_{BF}$ des Baufelds bereitstellen kann. Bisher wurde daher bei der Planung eines Herstellungsvorgangs so vorgegangen, dass die Objekte im Bauraum so angeordnet wurden, dass bevorzugt die Situation nach Fig. 4a vorlag. Allerdings lassen nicht alle Objektgeometrien solch eine Optimierung des Pulververbrauchs zu.

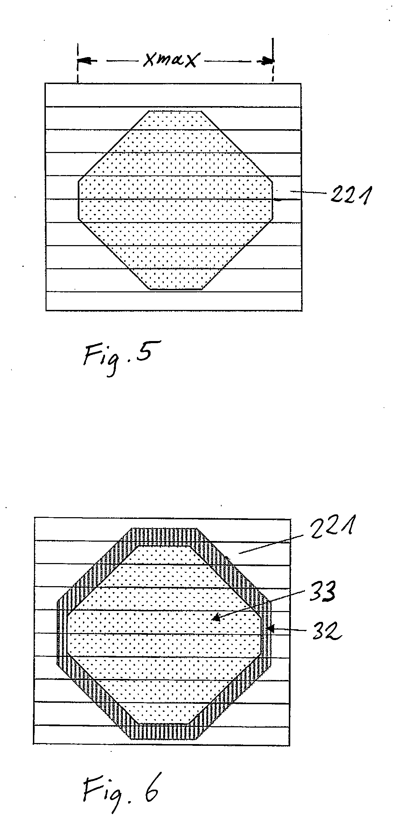

Das Verfahren wird nun im Detail mit Bezug auf Fig. 5 beschrieben:

Gemäß der ersten Ausführungsform prüft die Steuereinheit 11 die Lage des zuletzt belichteten Objektquerschnitts innerhalb des Baufelds 22. Hierzu führt die Steuereinheit 11 eine Zerlegung des Baufelds in n (n > 1) schmale Streifen 221 durch. Die Streifen 221 erstrecken sich dabei in x-Richtung, also in Richtung der Breite $W_{BF}$ des Baufelds 22 bzw. in Verfahrrichtung des Beschichters 5. Anhand der CAD-Daten des herzustellenden Objekts kann die Steuereinheit 11 zunächst ermitteln, in welchem Streifen der in der vorangegangenen Pulverschicht verfestigte Objektquerschnitt vorhanden ist. Aus den CAD-Daten geht auch die ursprüngliche Dicke d1 der vorangegangenen Pulverschicht hervor. In einem zweiten Schritt ermittelt nun die Steuereinheit 11 für jeden Streifen 221, in dem der in der vorangegangenen Pulverschicht verfestigte Objektquerschnitt vorhanden ist, die Ausdehnung $x_i$ in x-Richtung (der Verfahrrichtung des Beschichters 5) des Objektquerschnitts in diesem Streifen. Für die Ermittlung der zur Schwundkompensation benötigten zusätzlichen Pulvermenge P2 wird dann das Maximum (MAX) der streifenweisen Produkte aus Ausdehnung $x_i$ in Verfahrrichtung des Beschichters 5 und Schichtdicke d1 der vorangegangenen Pulverschicht herangezogen. Da die Schichtdicke d1 der vorangegangenen Pulverschicht für alle Streifen gleich ist, ist klar, dass das Produkt nicht für jeden Streifen separat bestimmt werden muss, sondern auch zunächst lediglich der Maximalwert xmax der streifenweisen Ausdehnungen $x_i$ bestimmt werden kann und dann mit der Schichtdicke d1 zum Erhalt des Maximums (MAX) multipliziert werden kann.

Der sich ergebende Verfahrweg $S_D$ für den Stempel 12b im Dosierbehälter 12a der Vorrichtung in Fig. 1 ergibt sich sodann durch die folgende Gleichung:

$$S_D = [L_{BF} * W_{BF} * (d2 + SF) + L_{BF} * MAX * PV]/(L_D * W_D) \quad (1),$$

wobei d2 die gewünschte Dicke der aufzutragenden Schicht ist, SF ein Sicherheitsfaktor ist, durch den Pulververluste beim Auftrag berücksichtigt werden und PV den Prozentsatz beschreibt, um den die Schichtdicke des Aufbaumaterials (18) bei Verfestigung geschrumpft ist.

In der Regel wird die Länge des Zuführstempels $L_D$ gleich der Länge des Baufelds $L_{BF}$ sein (Ausdehnung in y-Richtung in Fig. 5), so dass sich die obige Gleichung vereinfacht zu

$$S_D = [W_{BF} * (d2 + SF) + MAX * PV]/W_D. \quad (2)$$

Durch das Verfahren nach der ersten Ausführungsform ist sichergestellt, dass an allen Stellen des zuletzt verfestigten Objektquerschnitts genügend Pulver aufgetragen wird, um den Schwund infolge der Pulververdichtung zu kompensieren. Gleichzeitig wird der Pulververbrauch auf das Nötigste begrenzt.

Bei dem oben geschilderten Verfahren ist die Ermittlung der maximalen Ausdehnung des zuletzt verfestigten Objektquerschnitts in x-Richtung umso genauer, je geringer die Streifenbreite bei der Zerlegung des Baufeldes in Streifen ist. In der Praxis wird man einen Kompromiss finden, da natürlich mit abnehmender Streifenbreite die Anzahl der Streifen zunimmt und damit die Zeitdauer für die Ermittlung der maximalen Ausdehnung zunimmt. Ein beispielhafter Wert für die Streifenbreite könnte ein Wert zwischen 1 und 2 Zentimeter sein. Darüberhinaus ist alternativ auch eine Vorgehensweise möglich, bei der die maximale Ausdehnung in x-Richtung nicht mittels der beschriebenen Streifenzerlegung sondern in anderer Weise ermittelt wird. Schließlich muss die Breite der einzelnen Streifen nicht für alle Streifen gleich sein. Abhängig vom Objektquerschnitt kann es sich anbieten, unterschiedliche Breiten für zumindest einige der Streifen zu wählen.

In Fig. 5 ist der zuletzt verfestigte Objektquerschnitt einstückig dargestellt. Natürlich gibt es auch Bauvorgänge, bei denen in einer Schicht eine Mehrzahl von nicht miteinander verbundenen Objektquerschnitten verfestigt wird, beispielsweise wenn mehrere Objekte gleichzeitig hergestellt werden oder wenn bei einem Objekt unterschiedliche Vorsprünge in Baurichtung (z-Richtung) vorhanden sind. Hier kommt es dann darauf an, die Ausdehnungen der einzelnen Objektquerschnitte in x-Richtung zu bestimmen und aufzusummieren. Es wird dann bei der Bestimmung des Maximums (MAX) der Produkte, da die Schichtdicke d1 für alle verfestigten Bereiche gleich ist, der Maximalwert der streifenweisen Aufsummationen über die Ausdehnungen der Objektquerschnitte in Verfahrrichtung des Beschichters (5) bestimmt und mit der Schichtdicke d1 multipliziert. Die obige Gleichung (1) wäre in solch einem Fall also wie nachfolgend zu modifizieren:

$$S_D = [L_{BF} * W_{BF} * (d2 + SF) + L_{BF} * maxsum_i * d1 * PV]/(L_D * W_D). \quad (3)$$

Dabei ist $sum_i$ die Summe über die Ausdehnungen der einzelnen Objektquerschnitte in x-Richtung innerhalb eines Streifens i, und $maxsum_i$ der Maximalwert über die streifenweisen Summierungen über die Ausdehnungen. Das oben erwähnte Maximum (MAX) über die streifenweisen Produkte wäre dann gleich

$$MAX = maxsum_i * d1.$$

Der Sicherheitsfaktor SF ist ein vorrichtungsabhängiger Parameter und kann durch Vorversuche ermittelt werden, bei denen der Pulververlust beim Auftrag einer Schicht ermittelt wird. Er wird von der tatsächlich verwendeten Herstellvorrichtung abhängig sein. Der Übersichtlichkeit halber ist der Sicherheitsfaktor in allen Gleichungen, die die Zusatzpulvermenge P2 beschreiben, nicht im Detail angeführt.

Der Wert für den Pulververdichtungsfaktor PV ist eine materialabhängige Konstante und kann ebenfalls nach einfachen Vorversuchen für ein bestimmtes Aufbaumaterial, bei denen der Schwund beim Verdichten des Baumaterials unter den angestrebten Verfestigungsbedingungen (z.B. Pulvertemperatur, Laserleistung, etc.) untersucht wird, im Vorhinein festgelegt werden.

Durch das beschriebene Verfahren kann somit die aufgetragene Pulvermenge genau an die benötigte Pulvermenge angepasst werden, so dass Pulververluste durch eine Überdosierung vermieden werden können und damit Pulver eingespart werden kann.

Natürlich ist das beschriebene Vorgehen nicht nur in Zusammenhang mit der konkret beschriebenen Dosiervorrichtung 12 möglich. Für den Fall, dass die Dosiervorrichtung 12 sich nicht eines Zuführstempels bedient, sondern beispielsweise oberhalb der Bauebene 4 angeordnet ist, kommt es allgemein darauf an, das Volumen der zusätzlichen Pulvermenge P2 in Abhängigkeit von dem Maximum festzulegen. Analog zu den obigen Gleichungen (1) und (3) erhält man dann die folgenden Gleichungen:

$$\text{Volumen(P1)} + \text{Volumen(P2)} = L_{BF} * W_{BF} * (d2 + SF) + L_{BF} * MAX * PV \quad (1')$$

und

$$\text{Volumen(P1)} + \text{Volumen(P2)} = L_{BF} * W_{BF} * (d2 + SF) + L_{BF} * maxsum_i * d1 * PV \quad (3').$$

Zweite Ausführungsform

Gerade bei größeren Bauteilen kommt es vor, dass in einem Objektquerschnitt in unterschiedlichen Bereichen unterschiedliche Schichtdicken des Pulvers verfestigt werden. Beispielsweise trifft dies auf die so genannte Hülle-Kern-Bauweise zu:

Bei der Hülle-Kern-Bauweise findet eine Verfestigung nach dem Auftrag einer Pulverschicht mit einer bestimmten Schichtdicke (z.B. 20 $\mu$m) jeweils im Randbereich (Konturbereich bzw. Hüllbereich) eines Objektquerschnitts statt. Der Innenbereich eines Objektquerschnitts wird stets nur alle m Schichten, z.B. alle drei Schichten, verfestigt, also immer nur nach jedem m-ten Schichtauftrag. Dies führt dazu, dass im Innenbereich (Kernbereich) bei der Verfestigung eine m * d1 dicke Pulverschicht vorliegt, während im Randbereich immer eine d1 dicke Pulverschicht bei dem Verfestigungsvorgang vorliegt. Dadurch bedingt ist der Schwund bei der Pulververdichtung im Kernbereich deutlich größer als im Konturbereich. Nimmt man für d1 den Wert von 20 $\mu$m an und geht man davon aus, dass der Kernbereich alle drei Schichten verfestigt wird, so verdichtet sich im Kernbereich eine 60 $\mu$m dicke Pulverschicht und im Konturbereich eine 20 $\mu$m dicke Pulverschicht. Nimmt man an, dass der oben beschriebene Pulververdichtungsfaktor PV den Wert 0,5 hat, so erkennt man, dass im Kernbereich der Schwund 30 $\mu$m beträgt, während im Konturbereich der Schwund lediglich 10 $\mu$m beträgt.

Aufgrund des unterschiedlichen Schwunds in unterschiedlichen Bereichen eines Objektquerschnitts ist auch der zusätzliche Pulverbedarf zur Kompensation des Schwunds in unterschiedlichen Bereichen des Baufelds unterschiedlich. Um diesem Umstand Rechnung zu tragen, kann die obige Gleichung (1'), welche von der Steuereinheit 11 während des Bauvorgangs vor jedem Schichtauftrag neu berechnet wird, geringfügig abgeändert werden zu:

$$S_D = [L_{BF} * W_{BF} * (d2 + SF) + max_i(x1*d1 + x11*d11) * L_{BF} * PV] / (L_D * W_D) \quad (4).$$

Hierbei wurde eine zusätzliche Pulverschichtdicke d11 eingeführt, wobei für jeden Streifen die Ausdehnung x11 des verfestigten Bereich der Dicke d11 in x-Richtung mit der Dicke d11 multipliziert wird und hierzu das Produkt aus der Ausdehnung x1 des verfestigten Bereich der Dicke d1 in x-Richtung mit der Dicke d1 addiert wird (die x-Richtung ist die Richtung der Breite $W_{BF}$ des Baufelds 22). Gemäß der Gleichung (4) wird anschließend der Maximalwert $max_i$ der auf diese Weise streifenweise bestimmten Werte der Festlegung der Zusatzpulvermenge P2 zugrundegelegt. Der Maximalwert $max_i$ entspricht damit dem obigen Maximum MAX.

In Fig. 6 ist das Vorgehen nochmals kurz veranschaulicht:

Im Kernbereich 33 liegt eine Dicke d11 der zuletzt verfestigten Pulverschicht vor und im schraffierten Konturbereich 32 liegt eine Dicke d1 vor. Bei der Berechnung von $S_D$ wird innerhalb jedes Streifens, in dem ein in der vorangegangen

Pulverschicht verfestigter Objektquerschnitt vorhanden ist, über die Ausdehnungen der verfestigten Bereiche 33 aussummiert und die Summe mit der Dicke d11 multipliziert sowie hierzu das Produkt aus der Summe der Ausdehnungen der verfestigten Bereiche 32 in x-Richtung mit der Dicke d1 addiert. Anschließend wird der Maximalwert der solchermaßen streifenweise ermittelten Werte ermittelt und der Dosierung der Zusatzpulvermenge zugrundegelegt (die Zusatzpulvermenge wird proportional zu diesem Maximalwert gewählt).

Natürlich ist das Vorgehen nicht auf das Vorliegen von nur zwei unterschiedlichen Schichtdicken im zuletzt verfestigten Bereich beschränkt. Für k Bereiche (k > 1) unterschiedlicher Schichtdicke dj ($1 \leq j \leq k$) kann die Steuereinheit ganz allgemein den Verfahrweg des Zuführstempels festlegen zu:

$$S_D = [L_{BF}*W_{BF}*(d2+SF) + \max_i(x1*d1+ \ldots xj*dj \ldots xk*dk)*L_{BF}*PV]/(L_D*W_D)$$

$$(5).$$

Falls die Dosiervorrichtung 12 sich nicht eines Zuführstempels bedient, werden die Pulvermengen P1 und P2 analog zu den obigen Gleichungen (4) und (5) wie folgt durch die Steuereinheit 11 festgelegt:

$$\text{Volumen(P1)} + \text{Volumen(P2)} =$$
$$L_{BF} * W_{BF} * (d2 + SF) + \max_i(x1*d1+x11*d11)*L_{BF}*PV \quad (4')$$

und

$$\text{Volumen(P1)} + \text{Volumen(P2)} =$$
$$L_{BF}*W_{BF}*(d2+SF) + \max_i(x1*d1+ \ldots + xj*dj + \ldots + xk*dk)*L_{BF}*PV] \quad (5').$$

Wiederum ist $\max_i$ das Maximum der für alle Streifen, in denen ein Objektquerschnitt vorhanden ist, ermittelten Werte. Obwohl man alle n Streifen der Streifenzerlegung bei den Berechnungen in dieser Anmeldung berücksichtigen kann, ist es vorteilhaft nur solche Streifen der Berechnung zugrunde zu legen, in denen ein Objektquerschnitt tatsächlich vorhanden ist. Sind schließlich in einem Streifen der Streifenzerlegung mehrere verfestigte Bereiche gleicher Schichtdicke möglich, so können analog zu Gleichung (3) die Gleichungen (5) und (5') noch abgewandelt werden zu

$$S_D = [L_{BF}*W_{BF}*(d2+SF)+$$
$$\max_i(sumx1*d1+ \ldots +sumxj*dj+ \ldots +sumxk*dk)*L_{BF}*PV]/(L_D*W_D) \quad (6)$$

beziehungsweise

$$\text{Volumen(P1)} + \text{Volumen(P2)} =$$
$$L_{BF}*W_{BF}*(d2+SF) + \max_i(sumx1*d1+ \ldots +sumxj*dj+ \ldots +sumxk*dk)*L_{BF}*PV]$$

$$(6').$$

Dabei ist sumx1 die Summe über alle Ausdehnungen in x-Richtung der innerhalb eines Streifens vorhandenen verfestigten Bereiche der Dicke d1, sumxj die Summe über alle Ausdehnungen in x-Richtung der innerhalb eines Streifens vorhandenen verfestigten Bereiche der Dicke dj und sumxk die Summe über alle Ausdehnungen in x-Richtung der innerhalb eines Streifens vorhandenen verfestigten Bereiche der Dicke dk.

Schließlich sei noch erwähnt, dass auch die obigen Gleichungen (6) und (6') auf den Fall des Vorliegens von nur zwei Bereichen unterschiedlicher Schichtdicke anwendbar sind.

Wie auch bei der ersten Ausführungsform so ist bevorzugt auch bei der zweiten Ausführungsform die Länge der Dosiervorrichtung $L_D$ gleich der Länge des Baufelds $L_{BF}$.

Dritte Ausführungsform

Gemäß der dritten Ausführungsform ist die Dosiervorrichtung 12, die in der Vorrichtung der Fig. 1 gezeigt ist, in besonderer Weise ausgebildet, nämlich so, dass in der Richtung der Breite $W_D$ des Dosierbehälters 12a, also senkrecht

**EP 3 322 573 B1**

zur Bewegungsrichtung des Beschichters 5, mehrere Zuführstempel 12b aneinander angrenzend angeordnet sind.

Jeder der Zuführstempel 12b ist über eine Höheneinstellvorrichtung unabhängig von den anderen Zuführstempeln 12b in der Höhe verstellbar. Die Steuereinheit 11 kann dadurch die Zuführstempel 12b so ansteuern, dass sie vor dem Auftrag einer neuen Schicht unterschiedlich weit angehoben werden. Dies ermöglicht es, entlang der Länge $L_{BF}$ des Baufeldes 22, also senkrecht zur Bewegungsrichtung des Beschichters 5, unterschiedlich große Pulvermengen für den Schichtauftrag bereitzustellen.

Mit der beschriebenen Ausgestaltung der Dosiervorrichtung 12 lässt sich der Pulverauftrag in besonderem Maße optimieren:

Vor dem Auftrag einer neuen Pulverschicht ermittelt die Steuereinheit 11, an welchen Stellen in y-Richtung, also senkrecht zur Bewegungsrichtung des Beschichters, sich der zuletzt verfestigte Objektquerschnitt bzw. die zuletzt verfestigten Objektquerschnitte befinden. An diesen Stellen kann dann durch die Dosiervorrichtung 12 vermehrt Pulver zur Verfügung gestellt werden durch Verfahren der entsprechenden Zuführstempel 12b um einen größeren Betrag nach oben.

Natürlich kann die Dosiervorrichtung 12 gemäß der dritten Ausführungsform auch mit den Vorrichtungen zur schichtweisen generativen Herstellung von dreidimensionalen Objekten, wie sie bei der ersten und zweiten Ausführungsform beschrieben wurden, kombiniert werden. Insbesondere kann auch jedes der im Zusammenhang mit der ersten und zweiten Ausführungsform beschriebenen Verfahren, einschließlich der dort beschriebenen Abwandlungsmöglichkeiten, auch unter Verwendung der bei der dritten Ausführungsform beschriebenen Dosiervorrichtung 12 durchgeführt werden.

In vorteilhafter Weise sind jedem Zuführstempel bestimmte Streifen der Streifenzerlegung zugeordnet. In einer besonders vorteilhaften Weiterbildung entspricht jedem Streifen der Streifenzerlegung, die durch die Steuereinheit 11 durchgeführt wird, genau ein Zuführstempel 12b. Das bedeutet, jeder Streifen wird so gewählt, dass er einem Zuführstempel in Richtung der Breite $W_{BF}$ des Baufelds entspricht, wobei seine Breite gleich der Breite des Zuführstempels ist. In diesem Falle kann jedem Streifen (genau) die benötigte Pulvermenge zugeführt werden, welche ermittelt wurde unter Berücksichtigung der Ausdehnung des zuletzt verfestigten Objektquerschnitts in Richtung der Breite des Baufelds 22 innerhalb dieses Streifens.

Jeder der Zuführstempel 12b wird dann um einen Betrag angehoben, der ermittelt wurde basierend auf dem Maximalwert des benötigten Pulvervolumens in den Streifen (möglicherweise auch nur einem), die diesem Zuführstempel 12b "zugeordnet" sind. Für den Verfahrweg $S_D$ eines der Zuführstempel 12b ergibt sich also in Analogie zur Gleichung (1) (unter der vereinfachenden Annahme, dass jedem Stempel genau ein Streifen zugeordnet ist):

$$S_D=[W_{BF} *(d2 + SF) + MAX * PV]/(W_D) \quad (1).$$

Man beachte, dass das Maximum MAX nicht über alle Streifen, sondern nur in Bezug auf die einem Zuführstempel 12b "zugeordneten" Streifen gebildet wird.

Für die durch die obigen Gleichungen (3) bis (5) behandelten Fälle erhält man in Analogie zu diesen Gleichungen für den Verfahrweg jedes Stempels:

$$S_D=[W_{BF} * (d2 + SF) + sum_i * d1 * PV]/(W_D) \quad (3),$$

$$S_D=[W_{BF}*(d2+SF)+ (x1_i*d1+x11_i*d11)*PV]/(W_D) \quad (4)$$

und

$$S_D=[W_{BF}*(d2+SF) + (x1_i*d1+ \dots + xj_i*dj + \dots + xk_i*dk)*PV]/(W_D) \quad (5).$$

mit $x1_i$ und $x11_i$ gleich der Ausdehnung des verfestigten Bereichs der ursprünglichen Dicke d1 bzw. d11 im Streifen i und $xj_i$ gleich der Ausdehnung des verfestigten Bereichs der ursprünglichen Dicke dj im Streifen i.

Bei den bisher beschriebenen Ausgestaltungen der dritten Ausführungsform schiebt der Beschichter 5 das Auftragspulver auf das Baufeld 22, nachdem die Zuführstempel 12b in der Dosiervorrichtung 12 angehoben wurden. Um zu verhindern, dass die Unterschiede in der Pulverauftragsmenge, die durch die unterschiedlichen Zuführstempel 12b bereitgestellt wurden, durch eine seitliche Bewegung (in Längsrichtung des Baufelds 22) geringer werden, kann in vorteilhafter Weise der Beschichter 5 mit Trennwänden versehen werden, bei welchen es sich um Wände handelt, die sich in der Bewegungsrichtung des Beschichters 5 erstrecken.

8

Zweckmäßigerweise befinden sich jeweils Trennwände genau an jenen Stellen, an denen zwei Zuführstempel 12b aneinandergrenzen.

Schließlich sei noch bezüglich der dritten Ausführungsform bemerkt, dass die Ausdehnungen der einzelnen Stempel senkrecht zur Bewegungsrichtung des Beschichters nicht alle gleich sein müssen. Entsprechend müssen auch die Streifenbreiten $y_i$ bei der Streifenzerlegung nicht alle zueinander gleich sein.

Vierte Ausführungsform

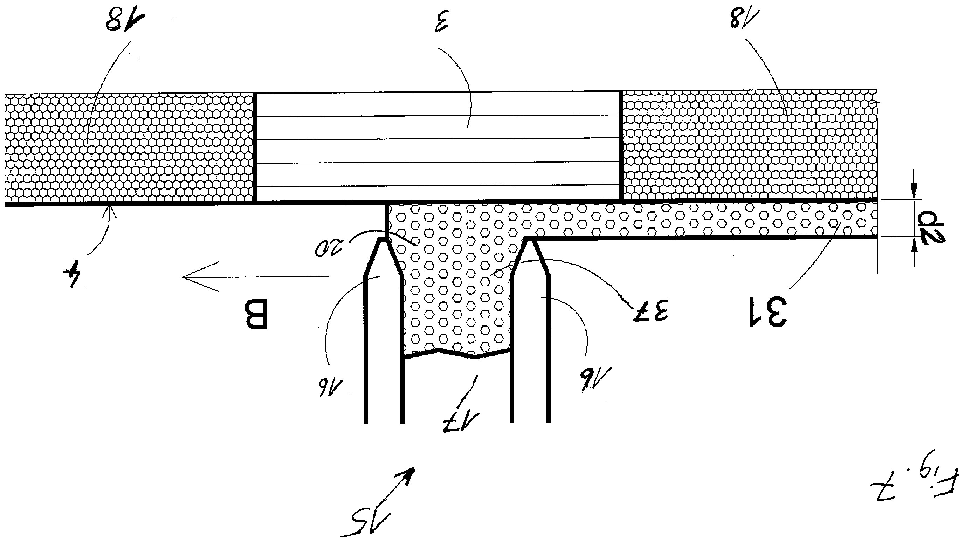

Gemäß der vierten Ausführungsform wird in der Herstellvorrichtung von Fig. 1 anstelle der Dosiervorrichtung 12 und anstelle des Beschichters 5 ein Beschichter 15 verwendet, in den bereits eine Dosiereinrichtung integriert ist. Das Auftragsprinzip mit solch einem Beschichter 15 wird anhand von Fig. 7 beschrieben, welche einen schematischen seitlichen Schnitt durch den Beschichter 15 oberhalb des Baufelds 4 zeigt:

In Fig. 7 ist eine Momentaufnahme während der Fahrt des Beschichters 15 über die Bauebene 4 in der Bewegungsrichtung B gezeigt. Man erkennt in der Schnittansicht verfestigte Schichtbereiche in dem Objekt 3. In dem unverfestigt gebliebenen Pulver 18 aus vorangehenden Schichtaufträgen ist keine Schichtung gezeigt. Die Höhen von verfestigten Schichtbereichen und unverfestigt gebliebenem Pulver sind hier der Einfachheit halber gleich dargestellt, obwohl das in Bezug auf insbesondere Fig. 3 Gesagte natürlich auch hier gilt. Der Beschichter 15 besteht im Wesentlichen aus zwei Auftragsklingen 16, die in Bewegungsrichtung B mit einem Abstand zueinander angeordnet sind. Die Klingen 16 erstrecken sich parallel zueinander senkrecht zur Bewegungsrichtung B bevorzugt über die gesamte Länge $L_{BF}$ des Baufelds, d.h. bevorzugt ist die Länge des Beschichters $L_D$ senkrecht zu seiner Bewegungsrichtung gleich der Länge $L_{BF}$. Zwischen den Klingen 16 weist der Beschichter 15 einen Vorratsraum 17 auf mit einem für den Auftrag einer Schicht 31 notwendigen Pulvervorrat 37. Der Vorratsraum 17 weist an seinem unteren Ende eine Öffnung 20 auf, durch welche während der Bewegung des Beschichters 15 Baumaterial austreten kann, welches eine Schicht der Dicke d2 bildet.

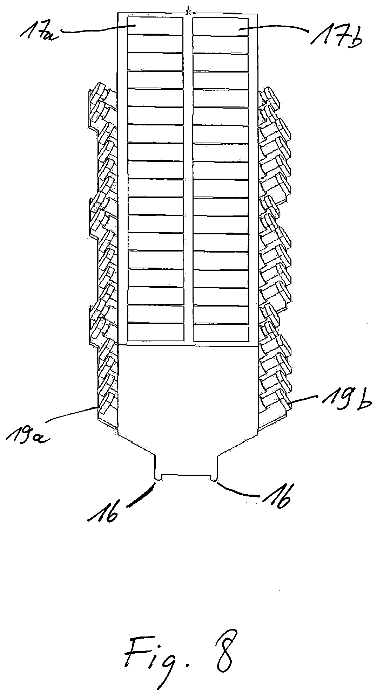

Erfindungsgemäß ist der Vorratsraum 17 in eine Mehrzahl von Vorratskammern 17a, 17b unterteilt, die in einer Richtung senkrecht zur Bewegungsrichtung (in Fig. 7 in die Blattebene hinein) aneinandergrenzend angeordnet sind. Fig. 8 zeigt in diesem Zusammenhang eine Ausführungsform eines Beschichters bei Betrachtung schräg von oben, also aus der gleichen seitlichen Betrachtungsposition wie in Fig. 7, jedoch mit einem erhöhten Standort des Betrachters.

In Fig. 8 weist der Beschichter eine lineare Anordnung der Vorratskammern 17a, 17b in einer Richtung senkrecht zur Bewegungsrichtung des Beschichters auf. Die Besonderheit des Beschichters von Figur 8 ist die, dass in Bewegungsrichtung des Beschichters zwei Vorratskammern 17a und 17b angeordnet sind. Dies muss im Allgemeinen aber nicht so sein und man könnte auch in der Bewegungsrichtung des Beschichters auf die Unterteilung in die Kammern 17a und 17b verzichten.

Der Beschichter 15 mit der Mehrzahl von Vorratskammern kann somit als Dosiervorrichtung angesehen werden, bei der die in einer Richtung senkrecht zur Bewegungsrichtung des Beschichters angeordneten Vorratskammern als Mehrzahl von Pulverzuführvorrichtungen angesehen werden können, die voneinander unabhängig die Menge des beim Schichtauftrag aufzutragenden Pulvermaterials vorgeben können:

Durch das Vorhandensein von mehreren Vorratskammern in einer Richtung senkrecht zur Bewegungsrichtung des Beschichters ist es möglich, an unterschiedlichen Stellen des Baufelds 22 in der Richtung senkrecht zur Bewegungsrichtung unterschiedliche Pulvermengen zuzuführen, da die Vorratskammern entlang der Richtung senkrecht zur Bewegungsrichtung unterschiedliche Füllmengen aufweisen können. Damit aber ermöglicht der erfindungsgemäße Beschichter einen pulversparenden Schichtauftrag beispielsweise in dem in Figur 4b dargestellten Fall: Nur jene Vorratskammern, die beim Schichtauftrag den bereits verfestigten Bereich 3 überstreichen, müssen neben der Pulvermenge P1 für eine Schicht der Dicke d2 noch eine Zusatzpulvermenge P2 aufweisen, durch welche der Schwund im verfestigten Bereich 3 ausgeglichen wird. Es ist also auch hier möglich, (im Wesentlichen) genau den zuvor gemäß den jeweiligen Berechnungsformeln ermittelten Pulverbedarf in den jeweiligen senkrecht zur Beschichtungsrichtung angeordneten Vorratskammern vorzuhalten, um eine optimierte Pulverdosierung auf Basis der vorher erfolgten Ermittlung des Pulverbedarfs zu erzielen. Es wäre weiter sogar möglich, eine neue Aufbaumaterialschicht nur im Bereich des Objekts 3, nicht aber in anderen Bereichen des Baufelds aufzutragen.

Weiterhin sind in Fig. 8 Schieber 19a, 19b zu erkennen, mit denen die Öffnungen 20a, 20b am Boden der Vorratskammern 17a und 17b unbhängig voneinander verschlossen werden können. Mit diesen optionalen Verschlussmechanismen, die bevorzugt von der Steuereinheit 11 steuerbar sind, kann wahlweise ein Pulveraustritt aus einigen der Vorratskammern unterbunden bzw. gedrosselt werden. Somit kann auf flexible Weise eine Pulverzufuhr zu ausgewählten Positionen des Baufelds in einer Richtung senkrecht zur Bewegungsrichtung abgestellt werden.

Darüberhinaus ist es aber auch noch zusätzlich möglich, die Pulverzufuhr aus einigen bzw. allen der Vorratskammern während der Bewegung des Beschichters ein- oder auszuschalten. Damit kann eine Beschichtung lediglich in einem in einer Richtung parallel zur Bewegungsrichtung begrenzten Bereich des Baufeldes stattfinden. Es wäre also beispielsweise möglich eine Pulverschicht nur im Bereich des verfestigten Bereichs in Fig. 4a aufzutragen.

Anstelle von Schiebern eignen sich auch alle anderen Verschließvorrichtungen, mit denen ein Pulveraustritt am unteren Ende der Vorratskammern an- und ausschaltbar ist. Denkbar sind hier z. B. verschließbare Klappen, Düsen oder aber ein Lamellenverschluss.

In einer Abwandlung der erfindungsgemäßen Dosiervorrichtung ist der Öffnungsgrad der Verschließvorrichtungen 19a, 19b steuerbar. Hierdurch kann die Menge des senkrecht zur Bewegungsrichtung an unterschiedlichen Stellen dem Baufeld zuzuführenden Pulvers auf besonders einfache Weise eingestellt werden: Statt die zuzuführende Pulvermenge über den Füllgrad in den Vorratskammern einzustellen, wird einfach die Pulveraustrittsrate über den Öffnungsgrad der Öffnung am Boden einer Vorratskammer eingestellt.

In einer weiteren Abwandlung der vierten Ausführungsform wird mindestens eine der Vorratskammern mit einem Pulvermaterial befüllt, das unterschiedlich zu dem in anderen Vorratskammern befindlichen pulverförmigen Aufbaumaterial 18 ist. Damit können beispielsweise unterschiedliche Abschnitte eines Objekts aus unterschiedlichen Aufbaumaterialien hergestellt werden.

Die in Figur 8 gezeigte besondere Ausführungsform eines als Dosiervorrichtung wirkenden Beschichters ist dadurch gekennzeichnet, dass es an einer Position entlang der Richtung senkrecht zur Bewegungsrichtung jeweils zwei Vorratskammern 17a und 17b gibt. Die jeweilige zweite Kammer kann zunächst immer nur an jenen Stellen entlang der Richtung senkrecht zur Bewegungsrichtung befüllt sein, an denen besonders viel Pulver für einen Pulverauftrag benötigt wird. Der besondere Vorteil des Vorsehens von zwei (oder auch mehr) Vorratskammern an einer Position ergibt sich aber, wenn die Vorratskammern 17a, 17b mit unterschiedlichen Materialien befüllt werden. In solch einem Fall wird durch das entsprechende Betätigen der Verschließvorrichtungen 19a und 19b eingestellt, welches Material während der Bewegung des Beschichters an einer Position senkrecht zur Bewegungsrichtung für den Schichtauftrag verwendet wird. Es ist damit möglich, das zuzuführende Aufbaumaterial für jede beliebige Stelle des Baufeldes einzustellen. Während in Bewegungsrichtung des Beschichters die ortsgenaue Einstellbarkeit des zuzuführenden Pulvermaterials im Prinzip durch die Betätigungsgeschwindigkeit der Verschließvorrichtungen 19a, 19b relativ zur Bewegungsgeschwindigkeit des Beschichters beschränkt ist, ist in der Richtung senkrecht zur Bewegungsrichtung die Ortsgenauigkeit durch die Anzahl der Dosierkammern 17a, 17b bzw. deren jeweilige Ausdehnung senkrecht zur Bewegungsrichtung vorgegeben. Somit können nicht nur quer zur Beschichtungsrichtung, sondern auch in derselben lokal und gesteuert unterschiedliche Materialien durch entsprechende Auswahl der Dosierkammern 17a, 17b aufgetragen werden.

Wenn es in Bewegungsrichtung des Beschichters eine Mehrzahl von Vorratskammern 17a, 17b gibt, aus denen Pulvermaterial zugeführt werden kann, so kann die Genauigkeit, mit der das Pulver aus diesen Vorratskammern an einer bestimmten Position in Bewegungsrichtung des Beschichters aufgetragen wird, darunter leiden, dass die Vorratskammern 17a, 17b in Bewegungsrichtung an unterschiedlichen Stellen sitzen, wie dies in Fig. 8 unmittelbar erkennbar ist: Wenn in Fig. 8 senkrecht zur Bewegungsrichtung teilweise Kammern 17a und teilweise Kammern 17b geöffnet sind, so wird Pulver aus den Kammern 17a an anderer Stelle deponiert als Pulver aus den Kammern 17b (der Beschichter in Fig. 8 bewegt sich entweder von links nach rechts oder umgekehrt). Dieser Effekt kann prinzipiell auch dazu genutzt werden, unterschiedliche Pulver aus den Vorratskammern 17a, 17b zum Zwecke der Pulververmischung miteinander gleichzeitig aufzubringen; ggf. unterstützt durch eine Oszillationsbewegung des Beschichters.

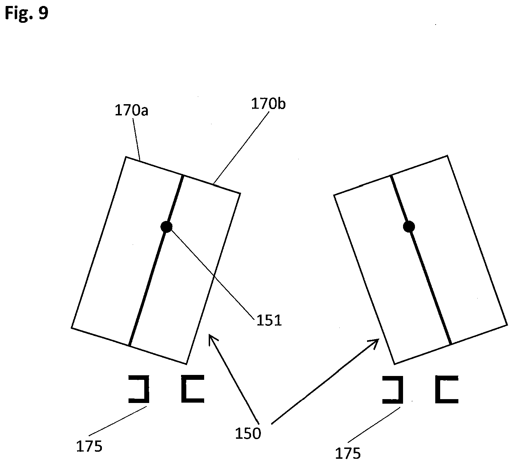

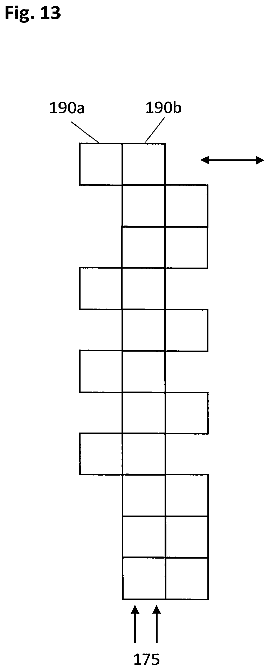

Diesem Problem kann begegnet werden, wenn eine in den Figuren 9 bis 12 gezeigte besondere Abwandlung und in Fig. 13 gezeigte weitere besondere Abwandlung des in Figur 8 gezeigten Beschichters der vierten Ausführungsform verwendet werden. Die Figuren 9 bis 12 zeigen dabei jeweils seitliche Querschnitte des besonders abgewandelten Beschichters und Fig. 13 eine Draufsicht auf den weiteren besonders abgewandelten Beschichter, wobei jeweils die in Bewegungsrichtung hintereinander angeordneten Vorratskammern 170a, 170b bzw. 180a bis 180c bzw. 190a, 190b gezeigt sind. Eine Mehrzahl der in Fig. 9 bis 12 gezeigten Paare bzw. Tripel von Vorratskammern sind also in einem entsprechenden Beschichter 150 bzw. 180 senkrecht zur Bewegungsrichtung (also in die Zeichenblattebene hinein) nebeneinander angeordnet. Jedes dieser Paare bzw. Tripel kann daher als bereits weiter oben erwähnte Pulverzuführvorrichtung angesehen werden.

Insbesondere ist bei dem besonders abgewandelten Beschichter und dem weiteren besonders abgewandelten Beschichter jede der Vorratskammern 170a, 170b bzw. 180a bis 180c bzw. 190a, 190b mit einer Verschließvorrichtung versehen, mittels welcher ein Pulveraustritt am unteren Ende der Vorratskammern an- und ausschaltbar ist. Denkbar sind hier wiederum z. B. verschließbare Klappen, Schieber, Düsen oder aber ein Lamellenverschluss als Verschließvorrichtung.

Die Besonderheit bei dem besonders abgewandelten Beschichter ist unmittelbar der Figur 9 zu entnehmen. Das dort gezeigte Paar von Vorratskammern 170a, 170b kann in dem Beschichter 150 über eine sich senkrecht zur Bewegungsrichtung des Beschichters erstreckende Schwenkachse 151 verschwenkt werden. Damit ist es möglich, z.B. beim Umschalten von der Pulverzufuhr aus der Vorratskammer 170b auf die Pulverzufuhr aus der Vorratskammer 170a durch entsprechendes Betätigen der Verschließvorrichtungen (nicht gezeigt) gleichzeitig das Paar von Vorratskammern zu verschwenken. Während in der linken Hälfte der Figur 9 der Auslass der Vorratskammer 170b über der unterhalb des Vorratskammerpaares angeordneten Auslassöffnung 175 angeordnet ist, ist in der rechten Hälfte der Figur 9 die Vorratskammer 170a über der im Beschichter ortsfesten Auslassöffnung 175 angeordnet. Bei beiden in Figur 9 gezeigten Stellungen des Vorratskammerpaares gelangt also Pulver durch dieselbe Auslassöffnung auf das Baufeld, so dass sich durch das Umschalten von der einen Vorratskammer auf die andere nicht der Ort relativ zum Beschichter ändert, an dem aus dem Beschichter Aufbaumaterial austritt.

Es ist möglich, im Beschichter für jedes der vorhandenen Vorratskammerpaare 170a, 170b eine diesem zugeordnete separate Auslassöffnung 175 vorzusehen. Genausogut kann man aber auch mehreren nebeneinanderliegenden Vorratskammerpaaren eine gemeinsame Auslassöffnung 175 zuordnen, welche dann eine längliche Gestalt hat und sich quer zur Bewegungsrichtung des Beschichters erstreckt. Speziell kann auch allen in dem Beschichter vorhandenen nebeneinanderliegenden Vorratskammerpaaren eine gemeinsame Auslassöffnung 175 zugeordnet sein.

Das Verschwenken eines Vorratskammerpaares um die Schwenkachse 151 kann mittels Stellmotoren bzw. Schrittmotoren bzw. Piezomotoren bewerkstelligt werden. Dabei kann auch vorgesehen werden, dass mehrere Vorratskammerpaare gemeinsam verschwenkt werden, die nicht notwendigerweise nebeneinander liegen müssen. Insbesondere können auch mehrere Vorratskammerpaare gemeinsam einem Stellmotor zugeordnet sein. Die Schwenkachse kann eine sich durch mehrere Vorratskammerpaare erstreckende Welle, speziell auch eine sich entlang des gesamten Beschichters erstreckende Welle sein, an der die Vorratskammerpaare drehbar gelagert sind. Man könnte aber auch auf solch eine gemeinsame Welle verzichten, so dass die einzelnen Vorratskammerpaare jeweils mit einer eigenen Welle ausgestattet sind.

Das Betätigen der Verschließeinrichtungen in den Vorratsklammern und das Verschwenken können durch geeignet gewählte Ansteuersignale zeitlich aufeinander abgestimmt werden. Eine andere Möglichkeit besteht darin, mittels des Schwenkvorgangs die Verschließvorrichtungen zu betätigen, beispielsweise mittels einer mechanischen Bewegungskopplung des Schwenkvorgangs mit einer Bewegung der Verschließvorrichtungen und/oder mithilfe eines federbasierten Mechanismus.

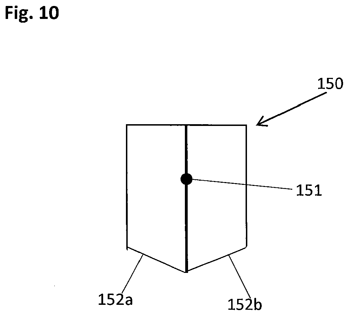

Fig. 10 zeigt ein Vorratskammerpaar mit abgewandelten Öffnungen an den Unterseiten. In Fig. 10 sind die Vorratskammern an ihrer Unterseite mit einer Schräge 152a, 152b versehen. Dadurch sind im Falle eines Verschwenkens die unteren Ränder der Vorratskammern im Wesentlichen parallel zur Arbeitsebene 4, um einen ungehinderten Pulveraustritt aus den Vorratskammern in die nicht gezeigte Auslassöffnung 175 hinein zu ermöglichen.

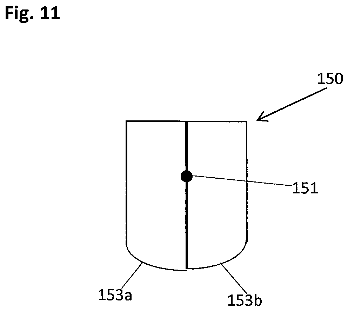

Fig. 11 zeigt ebenfalls ein Vorratskammerpaar mit abgewandelten Öffnungen an den Unterseiten. In Fig. 11 sind die Vorratskammern an ihrer Unterseite mit einer Rundung 153a, 153b versehen. Dadurch sind im Falle eines Verschwenkens die unteren Ränder der Vorratskammern für verschieden Schwenkstellungen im Wesentlichen parallel zur Arbeitsebene 4. Somit kann auch bereits während der Schwenkbewegung Pulver im Wesentlichen ungehindert austreten, was eine Beschleunigung des Pulverauftrags ermöglicht.

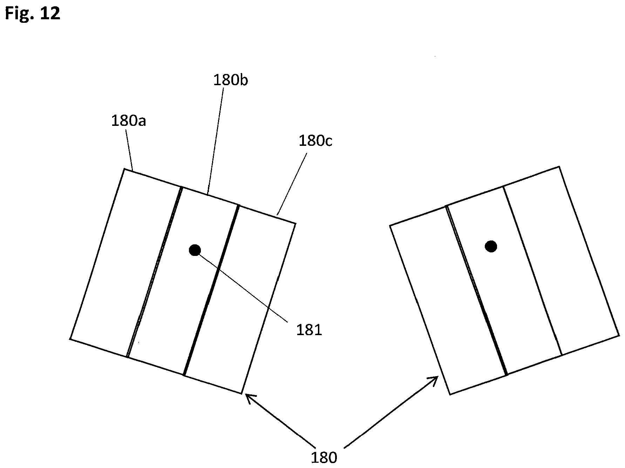

Anhand des in Fig. 12 gezeigten Vorratskammertripels 180a, 180b, 180c eines Beschichters 180 soll veranschaulicht werden, dass ohne Schwierigkeit auch mehr als zwei Vorratskammern in Bewegungsrichtung hintereinander angeordnet werden können. Die Lage der Schwenkachse 181 ist auch hier symmetrisch zur Ausdehnung des Vorratskammertripels in Bewegungsrichtung. Dies ist sehr zweckmäßig, muss aber nicht zwangsweise so sein. In Figur 12 sind jene Schwenkstellungen gezeigt, an denen Pulver aus der Vorratskammer 180a bzw. der Vorratskammer 180c in eine nicht gezeigte Auslassöffnung 175 im Beschichter austritt. In der nicht gezeigten Mittelstellung (bei unverschwenktem Vorratskammertripel) würde die untere Öffnung der Vorratskammer 180b über der Auslassöffnung 175 liegen. Die in Fig. 10 und 11 gezeigten Abwandlungen der Unterseiten der Vorratskammern sind in gleicher Weise auch auf das in Fig. 12 gezeigte Vorratskammertripel anwendbar. Schließlich ist es auch möglich, ganz allgemein eine Anzahl n von Vorratskammern hintereinander in Bewegungsrichtung im Beschichter anzuordnen und ggf. zu verschwenken, wobei n eine natürliche Zahl ist. Je kleiner die Abmessungen der Vorratskammern in Bewegungsrichtung des Beschichters sind, desto mehr lassen sich hintereinander anordnen.

Fig. 13 zeigt, wie bereits erwähnt, eine weitere besondere Abwandlung des Beschichters der vierten Ausführungsform. Dabei ist Fig. 13 eine sehr schematische Draufsicht von oben auf den Beschichter. Man erkennt in Fig. 13 Paare von Vorratskammern 190a, 190b, die im Beschichter in Bewegungsrichtung hintereinander angeordnet sind. Ähnlich wie in Fig. 9 bis 12 werden die Vorratskammerpaare wiederum dergestalt bewegt, dass wahlweise die eine oder die andere Vorratskammer oberhalb der schematisch dargestellten Lage der Auslassöffnung 175 ist. Bei der in Fig. 13 gezeigten besonderen Abwandlung erfolgt allerdings kein Verschwenken der Vorratskammerpaare, sondern ein horizontales Verschieben in bzw. gegen die Bewegungsrichtung, welches wiederum durch Stellmotoren bewerkstelligt werden kann. Ansonsten sind alle Details und Abwandlungsmöglichkeiten, die in Zusammenhang mit Figur 9 bis 12 beschrieben wurden in gleicher Weise auf die Ausführungsweise von Figur 13 anwendbar.

Es ist sogar denkbar die Ausführungsweisen von Fig. 9 bis 12 und Fig. 13 miteinander zu kombinieren, so dass die Vorratskammern sowohl verschwenkt als auch in Bewegungsrichtung horizontal verschoben werden. Auch auf diesen Fall sind alle Details und Abwandlungsmöglichkeiten, die in Zusammenhang mit Figur 9 bis 12 beschrieben wurden, in gleicher Weise anwendbar.

Natürlich kann die erfindungsgemäße Dosiervorrichtung gemäß der vierten Ausführungsform auch mit den Vorrichtungen zur schichtweisen generativen Herstellung von dreidimensionalen Objekten, wie sie bei der ersten und zweiten Ausführungsform beschrieben wurden, kombiniert werden. Insbesondere kann auch jedes der im Zusammenhang mit der ersten und zweiten Ausführungsform beschriebenen Verfahren, einschließlich der dort beschriebenen Abwandlungsmöglichkeiten, unter Verwendung der erfindungsgemäßen Dosiervorrichtung gemäß der vierten Ausführungsform durchgeführt werden.

Insbesondere wenn die Steuereinheit 11 zur Ermittlung der benötigten Auftragsmenge des pulverförmigen Aufbaumaterials eine streifenweise Zerlegung des CAD-Modells des Baufelds 22 durchführt, kann die Steuereinheit 11 für jeden Streifen separat die für diesen Streifen benötigte Pulvermenge ermitteln unter Berücksichtigung von bereits vorhandenen Verfestigungsbereichen in diesem Streifen in der vorangegangenen Schicht. Für eine Streifenbreite $y_i$ ermittelt somit die Steuereinheit 11 in Abwandlung von Gleichung (1') für jeden Streifen i ein benötigtes Pulvervolumen

$$\text{Volumen}(P1)_i + \text{Volumen}(P2)_i =$$
$$y_i * W_{BF} * (d2 + SF) + y_i * MAX * PV \qquad (1''),$$

wobei MAX das Produkt aus Schichtdicke d1 des verfestigten Bereichs in diesem Streifen mit der Ausdehnung $x_i$ in Bewegungsrichtung des verfestigten Bereichs in diesem Streifen ist. In Analogie zu den Gleichungen (3'), (4') und (5') erhält man

$$\text{Volumen}(P1)_i + \text{Volumen}(P2)_i =$$
$$y_i * W_{BF} * (d2 + SF) + y_i * sum_i * d1 * PV \qquad (3''),$$

$$\text{Volumen}(P1)_i + \text{Volumen}(P2)_i =$$
$$y_i * W_{BF} * (d2 + SF) + y_i * (x1_i*d1+x11_i*d11) * PV \qquad (4'')$$

bzw.

$$\text{Volumen}(P1)_i + \text{Volumen}(P2)_i =$$
$$y_i * W_{BF} * (d2 + SF) + y_i * PV *(x1_i*d1+ \dots + xj_i*dj + \dots + xk_i*dk)] \qquad (5'')$$

mit $x1_i$ und $x11_i$ gleich der Ausdehnung des verfestigten Bereichs der ursprünglichen Dicke d1 bzw. d11 im Streifen i und $xj_i$ gleich der Ausdehnung des verfestigten Bereichs der ursprünglichen Dicke dj im Streifen i.

Wenn gleichzeitig jedem Streifen der Streifenzerlegung, die durch die Steuereinheit 11 durchgeführt wird, genau eine Vorratskammer 17a, 17b entspricht, dann kann jedem Streifen durch die ihm zugeordnete Vorratskammer 17a, 17b genau diejenige Zusatzpulvermenge P2 zugeführt werden, die ermittelt wurde unter Berücksichtigung der Ausdehnung des zuletzt verfestigten Objektquerschnitts in Bewegungsrichtung innerhalb dieses Streifens.

Schließlich sei noch bezüglich der vierten Ausführungsform bemerkt, dass die Ausdehnungen der einzelnen Vorratskammern senkrecht zur Bewegungsrichtung nicht alle gleich sein müssen. Entsprechend müssen auch die Streifenbreiten $y_i$ bei der Streifenzerlegung nicht alle zueinander gleich sein. Ferner können einer Vorratskammer auch mehrere Streifen zugeordnet sein, wobei dann vorzugsweise die Gesamtausdehnung dieser Streifen senkrecht zur Bewegungsrichtung des Beschichters gleich der Ausdehnung der zugeordneten Vorratskammer senkrecht zur Bewegungsrichtung des Beschichters ist.

Ferner kann die vierte Ausführungsform der Erfindung auch noch so abgewandelt werden, dass am in Fig. 1 und 7 linken und/oder rechten seitlichen Rand des Baufelds 22 eine Pulverdosiervorrichtung angeordnet ist, welche senkrecht zur Bewegungsrichtung des Beschichters in gleicher Weise unterteilt ist wie der Beschichter und den einzelnen Vorratskammern des Beschichters separat die Pulvermengen $P1_i$ und $P2_i$ zuführt.

Weiterhin kann der Beschichter 15 auch nur über eine Auftragsklinge 16 verfügen, wobei sichergestellt ist, dass das Pulver aus den Vorratskammern in Bewegungsrichtung des Beschichters stets vor die Auftragsklinge 16 gelangt.

Für die Gestalt der Vorratskammern in dem Beschichter gibt es eine Vielzahl von Möglichkeiten. Am einfachsten lässt sich wohl ein rechteckiger oder quadratischer Querschnitt realisieren. Auch für die Abmessungen der Vorratskammern parallel zur Bauebene 4 gibt es eine Vielzahl an Möglichkeiten. Je kleiner die Abmessungen sind, desto höher ist die Genauigkeit beim Pulverauftrag. Denkbar ist es daher z.B. den Maximaldurchmesser der Vorratskammern parallel zur Bauebene 4 auf mindestens 0,2 mm, bevorzugt mindestens 0,5 mm, besonders bevorzugt mindestens 1 mm und/oder höchstens 10 mm, bevorzugt höchstens 5 mm, besonders bevorzugt höchstens 2 mm zu setzen.

Auch wenn die vorliegende Erfindung in allen Ausführungsformen anhand einer Lasersintervorrichtung beschrieben wurde, ist sie nicht auf das Lasersintern oder Laserschmelzen eingeschränkt. Sie kann auf beliebige Verfahren zum Herstellen eines dreidimensionalen Objektes durch schichtweises Aufbringen und selektives Verfestigen eines pulverförmigen Aufbaumaterials angewendet werden. So kann beispielsweise anstelle eines Lasers eine LED (Leuchtdiode), ein LED-Array, ein Elektronenstrahl oder jede andere Energie- bzw. Strahlenquelle, die geeignet ist, das pulverförmige Aufbaumaterial zu verfestigen, verwendet werden. Auch auf das selektive Maskensintern, bei dem anstelle eines Laserstrahls eine Maske und eine ausgedehnte Lichtquelle verwendet werden, oder auf das Absorptions- bzw. Inhibitionssintern kann die Erfindung angewendet werden. Ferner ist auch eine Anwendung in einem 3D-Druckverfahren, bei dem zum selektiven Verfestigen des Pulvermaterials ein Kleber zugeführt wird, möglich.

Schließlich ist die vorliegende Erfindung in allen Ausführungsformen nicht auf ein rechteckiges Baufeld 22 oder einen sich in gerader Linie über das Baufeld bewegenden Beschichter beschränkt. Vielmehr kann der Beschichter auch eine gekrümmte anstelle einer linearen Gestalt aufweisen und/oder einem krummlinigen Verfahrweg folgend über das Baufeld bewegt werden. Entsprechend müssen die Streifen bei der Streifenzerlegung ebenfalls nicht zwangsweise geradlinig sein, obwohl sie eine gleichbleibende Streifenbreite aufweisen sollten. Die Dosiervorrichtungen der dritten und vierten Ausführungsform müssen ebenfalls nicht zwangsweise geradlinig nebeneinander angeordnet sein, sondern die Anordnung kann an die Form des Beschichters angepasst sein.

Das oben beschriebene Verfahren kann dabei teilweise oder ganz mittels Hardwarekomponenten implementiert werden oder aber auch vollständig in Form eines Computerprogramms implementiert werden, welches durch die Steuereinheit 11 ausgeführt wird.

Die Steuereinheit 11 kann weiter auch räumlich von der Herstellvorrichtung separierte Einheiten umfassen, insbesondere eine Vorberechnungseinheit bzw. Pulverbedarfsermittlungseinheit, die im Betrieb die insgesamt für eine Schicht benötigte Zusatzpulvermenge in erfindungsgemäßer Weise ermittelt. Bevorzugt weist die Pulverbedarfsermittlungseinheit eine Schichtdateneingangseinheit, eine Pulvermengenbestimmungseinheit, die so eingerichtet ist, dass sie aus über die Schichtdateneingangseinheit entgegen genommenen Daten einer teilweise verfestigten Pulverschicht der Dicke d1 und der über die Schichtdateneingangseinheit entgegen genommenen Richtungsinformation über die Bewegungsrichtung eines Beschichters (5) in einer Herstellvorrichtung zur Herstellung mindestens eines dreidimensionalen Objekts (3) mittels sukzessiver schichtweiser Verfestigung eines pulverförmigen Aufbaumaterials das Maximum (MAX) des Produkts aus der Ausdehnung dieses verfestigten Bereichs in der teilweise verfestigten Schicht in Bewegungsrichtung (B) des Beschichters (5) und der Schichtdicke d1 ermittelt und für den Auftrag einer bei der Herstellung auf die teilweise verfestigte Schicht nachfolgenden Schicht der Dicke d2 eine Zusatzpulvermenge (P2) festlegt, die zu dem Wert des Maximums (MAX) proportional ist, und eine Zusatzpulvermengenausgabeeinheit auf. Bei der Schichtdateneingangseinheit und der Zusatzpulvermengenausgabeeinheit handelt es sich bevorzugt um Schnittstellen zur Entgegennahme bzw. Ausgabe von Daten. Die Schichtdateneingangseinheit greift dabei z.B. auf das computergestützte Modell des herzustellenden Objektes zu, auf welches auch die Steuereinheit 11 oder andere Teile der Steuereinheit 11 für den Herstellungsvorgang zugreift. Weiterhin ist es möglich, dass die Schichtdateneingangseinheit Informationen über die zuletzt verfestigte Schicht von der Steuereinheit 11 oder anderen Teilen der Steuereinheit 11 oder Herstellvorrichtung erhält. Die Zusatzpulvermengenausgabeeinheit gibt die Daten, welche die Zusatzpulvermenge P2 beschreiben an die Steuereinheit 11 oder andere Teile der Herstellvorrichtung aus. Damit wird also zu der für eine Schicht der Dicke d2 benötigten Pulvermenge mindestens eine Zusatzpulvermenge hinzugefügt, die proportional zu dem Wert des Maximums des Produkts aus der Ausdehnung des verfestigten Bereichs der zuvor aufgetragenen Schicht in Bewegungsrichtung des Beschichters und ihrer Schichtdicke ist.

## Patentansprüche

1.   Dosiervorrichtung zur Verwendung in einer Herstellungsvorrichtung zur Herstellung eines dreidimensionalen Objekts (3) mittels in z-Richtung schichtweiser Verfestigung eines pulverförmigen Aufbaumaterials (18) innerhalb eines Baufelds (22), die einen in einer xy-Ebene über das Baufeld (22) bewegbaren Beschichter (5, 15) zum Auftragen einer Schicht des Aufbaumaterials (18) in dem Baufeld (22) aufweist,
wobei die Dosiervorrichtung eine Mehrzahl von Pulverzuführvorrichtungen (12b, 17a, 17b) aufweist, die senkrecht zur Bewegungsrichtung des Beschichters (5, 15) in der xy-Ebene aneinandergrenzend angeordnet sind.

2.   Dosiervorrichtung nach Anspruch 1,
wobei die Pulverzuführvorrichtungen (12b, 17a, 17b) so ausgelegt sind, dass sie für einen Auftrag einer Schicht mit dem Beschichter (5, 15) voneinander unterschiedliche Volumina des pulverförmigen Aufbaumaterials (18) in einer Richtung senkrecht zur Bewegungsrichtung (B)zuführen können.

3.   Dosiervorrichtung gemäß Anspruch 1 oder 2, wobei in mindestens einer der Pulverzuführvorrichtungen (17a, 17b), bevorzugt in allen Pulverzuführvorrichtungen (17a, 17b), während der Bewegung des Beschichters (15) die Aufbaumaterialzufuhr ein- und/oder ausschaltbar ist.

**4.** Dosiervorrichtung gemäß einem der Ansprüche 1 bis 3, wobei mindestens eine der Pulverzuführvorrichtungen (17a, 17b), bevorzugt alle Pulverzuführvorrichtungen (17a, 17b), in Bewegungsrichtung des Beschichters in Teilkammern unterteilt ist und das pulverförmigen Aufbaumaterial jeweils wahlweise aus einer der Teilkammern zugeführt werden kann.

**5.** Dosiervorrichtung gemäß Anspruch 4, bei der eine in Bewegungsrichtung des Beschichters in Teilkammern (170a, 170b, 180a-180c, 190a, 190b) unterteilte Pulverzuführvorrichtung so ausgestaltet ist, dass mittels einer Bewegung der Pulverzuführvorrichtung die Unterseite jeder der Teilkammern über eine in dem Beschichter vorhandene Auslassöffnung (175), durch welche beim Beschichten das Aufbaumaterial (18) dem Baufeld (22) zugeführt wird, positionierbar ist.

**6.** Dosiervorrichtung gemäß Anspruch 5, bei der mehrere Pulverzuführvorrichtungen gemeinsam bewegbar sind.

**7.** Dosiervorrichtung gemäß Anspruch 4 oder 5, bei der die in dem Beschichter vorhandene Auslassöffnung in mehrere senkrecht zur Bewegungsrichtung nebeneinander liegende Auslassöffnungen unterteilt ist, bevorzugt so, dass jeder Pulverzuführvorrichtung eine separate Auslassöffnung zugeordnet ist.

**8.** Dosiervorrichtung gemäß einem der Ansprüche 5 bis 7, bei der die Bewegung einer Pulverzuführvorrichtung zum Positionieren der Unterseiten ihrer Teilkammern über die Auslassöffnung durch ein Verschwenken der Pulverzuführvorrichtung um eine sich senkrecht zur Bewegungsrichtung des Beschichters erstreckende Schwenkachse (151, 181) realisiert ist.

**9.** Dosiervorrichtung gemäß einem der Ansprüche 5 bis 8, bei der die Bewegung einer Pulverzuführvorrichtung zum Positionieren der Unterseiten ihrer Teilkammern über die Auslassöffnung durch ein Verfahren der Pulverzuführvorrichtung parallel zur Bewegungsrichtung des Beschichters realisiert ist.

**10.** Herstellvorrichtung zur Herstellung mindestens eines dreidimensionalen Objekts (3) mittels sukzessiver schichtweiser Verfestigung eines pulverförmigen Aufbaumaterials (18) innerhalb eines Baufelds (22) mit
einem über das Baufeld (22) bewegbaren Beschichter (5) zum Auftragen einer Schicht der Dicke d2 des Aufbaumaterials (18) auf eine bereits zuvor aufgetragene Schicht des Aufbaumaterials, welche in einem Bereich entsprechend zumindest einem Teil des Querschnitts des mindestens einen Objekts (3) verfestigt wurde,
einer Dosiervorrichtung (12, 17) nach einem der Ansprüche 1 bis 9, die geeignet ist, eine für den Auftrag einer Schicht der Dicke d2 mit dem Beschichter (5, 15, 150, 180) benötigte Menge des pulverförmigen Aufbaumaterials bereitzustellen,
einer Verfestigungsvorrichtung (8) zum Verfestigen des pulverförmigen Aufbaumaterials (18) in einem Bereich, der zumindest einem Teil des Querschnitts des mindestens einen dreidimensionalen Objekts (3) entspricht, und
einer Steuereinheit (11) zum Steuern des Beschichters (5, 15, 150, 180), der Dosiervorrichtung (12, 17) und der Verfestigungsvorrichtung (8),
wobei die Steuereinheit (11) so eingerichtet ist, dass sie vor der Ansteuerung des Beschichters (5, 15, 150, 180) zum Auftrag einer Schicht das Maximum (MAX) des Produkts aus der Ausdehnung eines verfestigten Bereichs der Dicke d1 in der zuvor verfestigten Schicht in Bewegungsrichtung (B) des Beschichters (5, 15, 150, 180) und der Schichtdicke d1 ermittelt, wobei d1 die Schichtdicke vor Verfestigung ist, und
wobei die Steuereinheit (11) so eingerichtet ist, dass sie ein Verfahren mit den folgenden Schritten durchführt:

a) Auftragen einer Schicht (31) des pulverförmigen Aufbaumaterials (18) mit einer vorbestimmten Dicke d2 auf eine bereits zuvor aufgetragene Schicht des Aufbaumaterials, die in einem Bereich entsprechend zumindest einem Teil des Querschnitts des mindestens einen Objekts (3) verfestigt wurde, wobei zum Auftragen des Aufbaumaterials (18) ein Beschichter (5, 15) in einer vorbestimmten Richtung (B) über die bereits zuvor aufgetragene Schicht, insbesondere den bereits verfestigten Bereich, bewegt wird und
b) Verfestigen des im Schritt a) aufgetragenen pulverförmigen Aufbaumaterials (18) in einem Bereich der aufgetragenen Schicht, der zumindest einem Teil des Querschnitts des mindestens einen dreidimensionalen Objekts (3) entspricht,

wobei die Schritte a) und b) mehrmals wiederholt werden bis alle Querschnitte des mindestens einen dreidimensionalen Objekts (3) verfestigt sind,
wobei vor dem Auftragen einer Schicht gemäß dem Schritt a) an einem verfestigten Bereich der Dicke d1 in der zuvor aufgetragenen Schicht das Maximum (MAX) des Produkts aus der Ausdehnung dieses verfestigten Bereichs in Bewegungsrichtung (B) des Beschichters (5) und der Schichtdicke d1 ermittelt wird, wobei d1 die Schichtdicke vor Verfestigung ist, und

beim Auftrag der Schicht im Schritt a) zusätzlich zu der für eine Schicht der Dicke d2 benötigten Pulvermenge (P1) mindestens eine Zusatzpulvermenge (P2) bereitgestellt wird, die zu dem Wert des Maximums (MAX) proportional ist.

11. Herstellvorrichtung gemäß Anspruch 10,
wobei die Steuereinheit (11) zur Ermittlung eine computergestützte Zerlegung des von dem Beschichter (5, 15, 150, 180) zu überstreichenden Bereichs der zuvor aufgetragenen Schicht in n Streifen durchführt, wobei n > 1 gilt und sich die Streifen in Bewegungsrichtung (B) des Beschichters (5, 15, 150, 180) erstrecken,
wobei jeweils einer oder mehrere Streifen einer Pulverzuführvorrichtung (12b, 17a, 17b) zugeordnet sind und die Ausdehnung der einer Pulverzuführvorrichtung (12b, 17a, 17b) zugeordneten Streifen senkrecht zur Bewegungsrichtung des Beschichters (5, 15, 150, 180) gleich der Ausdehnung dieser Pulverzuführvorrichtung (12b, 17a, 17b) senkrecht zur Bewegungsrichtung des Beschichters (5, 15, 150, 180) ist.

12. Herstellvorrichtung gemäß einem der Ansprüche 10 oder 11, wobei die Steuereinheit (11) zur Ermittlung des Maximums (MAX) auf ein computerbasiertes Modell des mindestens einen herzustellenden Objekts (3) zurückgreift.

13. Herstellvorrichtung gemäß einem der Ansprüche 10 bis 12, wobei zur Ermittlung des Maximums (MAX) eine computergestützte Zerlegung des von dem Beschichter (5, 15) zu überstreichenden Bereichs der zuvor aufgetragenen Schicht in n Streifen durchgeführt wird, wobei n > 1 gilt und sich die Streifen in Bewegungsrichtung (B) des Beschichters (5, 15) erstrecken,
wobei die Ausdehnung $x_i$ eines verfestigten Bereichs der Dicke d1 in Bewegungsrichtung (B) des Beschichters (5, 15) in jedem Streifen i, wobei $1 \leq i \leq n$ gilt, ermittelt wird und
der Maximalwert der streifenweisen Produkte aus der Ausdehnung $x_i$ eines verfestigten Bereichs in Bewegungsrichtung (B) des Beschichters (5, 15) und der Schichtdicke d1 als Maximum (MAX) verwendet wird.

14. Herstellvorrichtung nach Anspruch 13,
wobei im Schritt a) eine Schicht der Dicke d2 auf eine bereits zuvor aufgetragene Schicht des Aufbaumaterials aufgetragen wird, welche k verfestigte Bereiche mit k unterschiedlichen Schichtdicken dj, wobei $1 \leq j \leq k$ gilt und k eine natürliche Zahl größer 1 ist, aufweist,
wobei für jeden Streifen über die Produkte aus den Ausdehnungen $x_j$ der verfestigten Bereiche j in diesem Streifen in Bewegungsrichtung (B) des Beschichters (5, 15) und den zugehörigen Schichtdicken dj (B)aufsummiert wird und das Maximum der auf diese Weise streifenweise ermittelten Werte als Maximum (MAX) verwendet wird.

15. Herstellvorrichtung nach einem der Ansprüche 10 bis 14, wobei zur Ermittlung der Ausdehnung eines verfestigten Bereichs einer bestimmten Dicke in der Bewegungsrichtung (B) des Beschichters (5, 15) eine Summation über die Ausdehnungen von nicht zusammenhängenden Teilregionen dieses Bereichs in der Bewegungsrichtung (B) des Beschichters (5) durchgeführt wird.

## Claims

1. A metering device for use in a manufacturing device for manufacturing a three-dimensional object (3) by means of a solidification layer by layer in z direction of a building material in powder form (18) within a build area (22), which comprises a recoater (5, 15) movable across the build area (22) in an xy plane for applying a layer of the building material (18) in the build area (22),
wherein the metering device comprises several powder feeding devices (12b, 17a, 17b) arranged perpendicularly to the movement direction of the recoater (5, 15) and adjacent to each other in the xy plane.

2. The metering device according to claim 1,
wherein the powder feeding devices (12b, 17a, 17b) are configured such that they can feed volumes of the building material in powder form (18) different from one another in a direction perpendicular to the movement direction (B) for an application of a layer by the recoater (5, 15).

3. The metering device according to claim 1 or 2, wherein the building material feeding is switchable on and/or off in at least one of the powder feeding devices (17a, 17b), preferably in all powder feeding devices (17a, 17b), during the movement of the recoater (15).

4. The metering device according to one of claims 1 to 3, wherein at least one of the powder feeding devices (17a, 17b), preferably all powder feeding devices (17a, 17b), is subdivided into partial chambers in movement direction of the recoater and the building material in powder form can be respectively selectively fed from one of the partial chambers.

5. The metering device according to claim 4, in which a powder feeding device subdivided into partial chambers (170a, 170b, 180a-180c, 190a, 190b) in movement direction of the recoater is configured such that, by means of a movement of the powder feeding device, the bottom of each of the partial chambers is positionable above an outlet opening (175) provided in the recoater, through which the building material (18) is fed to the build area (22) during the application.

6. The metering device according to claim 5, in which several powder feeding devices are movable together.

7. The metering device according to claim 4 or 5, in which the outlet opening provided in the recoater is subdivided into several outlet openings adjacently arranged perpendicularly to the movement direction, preferably such that a separate outlet opening is allocated to each powder feeding device.

8. The metering device according to one of claims 5 to 7, in which the movement of a powder feeding device for positioning the bottoms of its partial chambers above the outlet opening is implemented by a pivoting of the powder feeding device about a pivot axis (151, 181) extending perpendicularly to the movement direction of the recoater.

9. The metering device according to one of claims 5 to 8, in which the movement of a powder feeding device for positioning the bottoms of its partial chambers above the outlet opening is implemented by moving the powder feeding device parallel to the movement direction of the recoater.

10. A manufacturing device for manufacturing at least one three-dimensional object (3) by means of a successive layer-by-layer solidification of a building material in powder form (18) within a build area (22), comprising
a recoater (5) movable across the build area (22) for applying a layer of the building material (18) having a thickness d2 onto a layer of the building material already previously applied that has been solidified in a region corresponding to at least a part of the cross section of the at least one object (3),
a metering device (12, 17) according to one of claims 1 to 9, which is suitable to provide an amount of the building material in powder form required for the application of a layer having the thickness d2 by the recoater (5, 15, 150, 180),
a solidification device (8) for solidifying the building material in powder form (18) in a region corresponding to at least a part of the cross section of the at least one three-dimensional object (3), and
a control unit (11) for controlling the recoater (5, 15, 150, 180), the metering device (12, 17), and the solidification device (8),
wherein the control unit (11) is configured such that, prior to controlling the recoater (5, 15, 150, 180) for the application of a layer, it determines the maximum (MAX) of the product of the extension in movement direction (B) of the recoater (5, 15, 150, 180) of a solidified region having the thickness d1 in the previously solidified layer and of the layer thickness d1, wherein d1 is the layer thickness prior to the solidification, and
wherein the control unit (11) is configured such that it performs a method having the following steps:

a) applying a layer (31) of the building material in powder form (18) having a predetermined thickness d2 onto a layer of the building material already previously applied which has been solidified in a region corresponding to at least a part of the cross section of the at least one object (3), wherein, for applying the building material (18), a recoater (5, 15) is moved in a predetermined direction (B) across the layer already previously applied, in particular the region already solidified, and
b) solidifying the building material in powder form (18) applied in step a) in a region of the applied layer corresponding to at least a part of the cross section of the at least one three-dimensional object (3),

wherein the steps a) and b) are repeated several times until all cross sections of the at least one three-dimensional object (3) are solidified,
wherein, prior to the application of a layer according to step a), for a solidified region having a thickness d1 in the layer applied before, the maximum (MAX) of the product of the extension of this solidified region in movement direction (B) of the recoater (5) and of the thickness d1 is determined, wherein d1 is the thickness prior to the solidification, and during the application of the layer in step a), at least an additional powder amount (P2) proportional to the value of the maximum (MAX) is provided in addition to the powder amount (P1) required for a layer having the thickness d2.

**11.** The manufacturing device according to claim 10,
wherein, for determining, the control unit (11) performs a computer-aided segmentation of the region of the previously applied layer to be over-coated by the recoater (5, 15, 150, 180) into n strips, wherein n > 1 applies and the strips extend in movement direction (B) of the recoater (5, 15, 150, 180),
wherein respectively one or more strips are allocated to a powder feeding device (12b, 17a, 17b) and the extension of the strips allocated to a powder feeding device (12b, 17a, 17b) perpendicularly to the movement direction of the recoater (5, 15, 150, 180) is equal to the extension of this powder feeding device (12b, 17a, 17b) perpendicularly to the movement direction of the recoater (5, 15, 150, 180).

**12.** The manufacturing device according to claim 10 or 11,
wherein for determining the maximum (MAX), the control unit (11) accesses a computer-based model of the at least one object (3) to be manufactured.

**13.** The manufacturing device according to one of claims 10 to 12, wherein for determining the maximum (MAX), a computer-aided segmentation of the region of the previously applied layer to be covered by the recoater (5, 15) into n strips is performed, wherein n > 1 applies and the strips extend in the movement direction (B) of the recoater (5, 15), wherein the extension $x_i$ of a solidified region having the thickness d1 in movement direction (B) of the recoater (5, 15) is determined in each strip i, wherein $1 \leq i \leq n$ applies, and
the maximum value of the strip-wise products of the extension $x_i$ of a solidified region in movement direction (B) of the recoater (5, 15) and of the layer thickness d1 is used as maximum (MAX).

**14.** The manufacturing device according to claim 13,
wherein in step a) a layer having the thickness d2 is applied onto a layer of the building material already previously applied possessing k solidified regions having k different layer thicknesses dj, wherein $1 \leq j \leq k$ applies and k is a natural number greater than 1,
wherein, for each strip, it is summed up over the products of the extensions $x_j$ of the solidified regions j in this strip in movement direction (B) of the recoater (5, 15) and the corresponding layer thicknesses dj (B) and the maximum of the values determined strip-wise in this manner is used as maximum (MAX).

**15.** The manufacturing device according to one of claims 10 to 14, wherein for determining the extension of a solidified region having a specific thickness in the movement direction (B) of the recoater (5, 15), a summation over the extensions of non-contiguous partial regions of this region in the movement direction (B) of the recoater (5) is performed.

**Revendications**

**1.** Dispositif de dosage destiné à être utilisé dans un dispositif de fabrication pour fabriquer un objet (3) tridimensionnel au moyen d'une solidification par couches d'un matériau de construction (18) pulvérulent dans une direction z à l'intérieur d'un champ de construction (22), lequel dispositif présente un enducteur (5, 15) déplaçable dans un plan xy par-dessus le champ de construction (22) pour l'application d'une couche du matériau de construction (18) dans le champ de construction (22),
dans lequel le dispositif de dosage présente une pluralité de dispositifs d'amenée de poudre (12b, 17a, 17b) qui sont agencés en contigu dans le plan xy perpendiculairement à la direction de déplacement de l'enducteur (5, 15).

**2.** Dispositif de dosage selon la revendication 1,
dans lequel les dispositifs d'amenée de poudre (12b, 17a, 17b) sont disposés de telle sorte que, pour une application d'une couche avec l'enducteur (5, 15), ils puissent amener des volumes du matériau de construction (18) pulvérulent différents les uns des autres dans une direction perpendiculaire à la direction de déplacement (B).

**3.** Dispositif de dosage selon la revendication 1 ou 2, dans lequel dans au moins un des dispositifs d'amenée de poudre (17a, 17b), de préférence dans tous les dispositifs d'amenée de poudre (17a, 17b), l'amenée de matériau de construction peut être activée et/ou désactivée pendant le déplacement de l'enducteur (15).

**4.** Dispositif de dosage selon l'une des revendications 1 à 3, dans lequel au moins un des dispositifs d'amenée de poudre (17a, 17b), de préférence tous les dispositifs d'amenée de poudre (17a, 17b), est subdivisé en chambres partielles dans la direction de déplacement de l'enducteur, et le matériau de construction pulvérulent peut être amené respectivement au choix depuis l'une des chambres partielles.

**5.** Dispositif de dosage selon la revendication 4, dans lequel un dispositif d'amenée de poudre subdivisé en chambres partielles (170a, 170b, 180a-180c, 190a, 190b) dans la direction de déplacement de l'enducteur est arrangé de telle sorte que, au moyen d'un déplacement du dispositif d'amenée de poudre, le côté inférieur de chacune des chambres partielles puisse être positionné par-dessus une ouverture de sortie (175) présente dans l'enducteur, à travers laquelle le matériau de construction (18) est amené au champ de construction (22) lors de l'enduction.

**6.** Dispositif de dosage selon la revendication 5, dans lequel plusieurs dispositifs d'amenée de poudre peuvent être déplacés ensemble.

**7.** Dispositif de dosage selon la revendication 4 ou 5, dans lequel l'ouverture de sortie présente dans l'enducteur est subdivisée en plusieurs ouvertures de sortie se situant les unes à côté des autres perpendiculairement à la direction de déplacement, de préférence de telle sorte qu'à chaque dispositif d'amenée de poudre soit attribuée une ouverture de sortie séparée.

**8.** Dispositif de dosage selon l'une des revendications 5 à 7, dans lequel le déplacement d'un dispositif d'amenée de poudre pour positionner les côtés inférieurs de ses chambres partielles par-dessus l'ouverture de sortie est réalisé par un pivotement du dispositif d'amenée de poudre autour d'un axe de pivotement (151, 181) s'étendant perpendiculairement à la direction de déplacement de l'enducteur.

**9.** Dispositif de dosage selon l'une des revendications 5 à 8, dans lequel le déplacement d'un dispositif d'amenée de poudre pour positionner les côtés inférieurs de ses chambres partielles par-dessus l'ouverture de sortie est réalisé par un déplacement du dispositif d'amenée de poudre parallèlement à la direction de déplacement de l'enducteur.

**10.** Dispositif de fabrication destiné à fabriquer au moins un objet (3) tridimensionnel au moyen d'une solidification successive par couches d'un matériau de construction (18) pulvérulent à l'intérieur d'un champ de construction (22) avec

un enducteur (5) pouvant être déplacé par-dessus le champ de construction (22) pour l'application d'une couche d'épaisseur d2 du matériau de construction (18) sur une couche déjà précédemment appliquée du matériau de construction, laquelle avait été solidifiée dans une zone correspondant au moins à une partie de la section transversale du au moins un objet (3),

un dispositif de dosage (12, 17) selon l'une des revendications 1 à 9 qui est approprié pour fournir une quantité nécessaire du matériau de construction pulvérulent pour l'application d'une couche d'épaisseur d2 avec l'enducteur (5, 15, 150, 180),

un dispositif de solidification (8) pour solidifier le matériau de construction (18) pulvérulent dans une zone qui correspond au moins à une partie de la section transversale du au moins un objet (3) tridimensionnel,

et

une unité de commande (11) pour commander l'enducteur (5, 15, 150, 180), le dispositif de dosage (12, 17) et le dispositif de solidification (8),

dans lequel l'unité de commande (11) est conçue de telle sorte qu'elle établisse, avant le pilotage de l'enducteur (5, 15, 150, 180) en vue de l'application d'une couche, le maximum (MAX) du produit de l'extension d'une zone solidifiée d'épaisseur d1 dans la couche précédemment solidifiée dans la direction de déplacement (B) de l'enducteur (5, 15, 150, 180) et de l'épaisseur de couche d1, dans lequel d1 est l'épaisseur de couche avant solidification, et dans lequel l'unité de commande (11) est conçue de telle sorte qu'elle exécute un procédé avec les étapes suivantes consistant à :

a) appliquer une couche (31) du matériau de construction (18) pulvérulent avec une épaisseur d2 prédéterminée sur une couche déjà précédemment appliquée du matériau de construction, laquelle avait été solidifiée dans une zone correspondant au moins à une partie de la section transversale du au moins un objet (3), dans lequel pour appliquer le matériau de construction (18) un enducteur (5, 15) est déplacé dans une direction (B) prédéterminée par-dessus la couche déjà précédemment appliquée, en particulier la zone déjà solidifiée et

b) solidifier le matériau de construction (18) pulvérulent appliqué à l'étape a) dans une zone de la couche appliquée qui correspond au moins à une partie de la section transversale du au moins un objet (3) tridimensionnel,

dans lequel les étapes a) et b) sont répétées plusieurs fois jusqu'à ce que toutes les sections transversales du au moins un objet (3) tridimensionnel soient solidifiées,

dans lequel avant l'application d'une couche conformément à l'étape a) contre une zone solidifiée d'épaisseur d1 dans la couche précédemment appliquée, est établi le maximum (MAX) du produit de l'extension de cette zone solidifiée dans la direction de déplacement (B) de l'enducteur (5) et de l'épaisseur de couche d1, dans lequel d1 est l'épaisseur de couche avant solidification, et lors de l'application de la couche à l'étape a) est fournie, en plus de la quantité de poudre (P1) nécessaire pour une couche d'épaisseur d2, au moins une quantité de poudre supplémentaire (P2) qui est proportionnelle à la valeur du maximum (MAX).

11. Dispositif de fabrication selon la revendication 10,
dans lequel l'unité de commande (11), en vue de l'établissement, exécute une décomposition assistée par ordinateur de la zone à balayer en n bandes par l'enducteur (5, 15, 150, 180) de la couche appliquée précédemment, où n > 1 et les bandes s'étendent dans la direction de déplacement (B) de l'enducteur (5, 15, 150, 180),
dans lequel respectivement une ou plusieurs bandes sont attribuées à un dispositif d'amenée de poudre (12b, 17a, 17b) et l'extension des bandes attribuées à un dispositif d'amenée de poudre (12b, 17a, 17b) perpendiculairement à la direction de déplacement de l'enducteur (5, 15, 150, 180) est égale à l'extension de ce dispositif d'amenée de poudre (12b, 17a, 17b) perpendiculairement à la direction de déplacement de l'enducteur (5, 15, 150, 180).

12. Dispositif de fabrication selon l'une des revendications 10 ou 11, dans lequel l'unité de commande (11), en vue de l'établissement du maximum (MAX), a recours à un modèle informatisé du au moins un objet (3) à fabriquer.

13. Dispositif de fabrication selon l'une des revendications 10 à 12, dans lequel, en vue de l'établissement du maximum (MAX), est exécutée une décomposition assistée par ordinateur de la zone à balayer en n bandes par l'enducteur (5, 15) de la couche appliquée précédemment, où n > 1 et les bandes s'étendent dans la direction de déplacement (B) de l'enducteur (5, 15),
dans lequel l'extension xi d'une zone solidifiée d'épaisseur d1 est établie dans chaque bande i dans la direction de déplacement (B) de l'enducteur (5, 15), où $1 \leq i \leq n$ et
la valeur maximale des produits par bande de l'extension xi d'une zone solidifiée dans la direction de déplacement (B) de l'enducteur (5, 15) et de l'épaisseur de couche d1 est utilisée en tant que maximum (MAX).

14. Dispositif de fabrication selon la revendication 13,
dans lequel à l'étape a) une couche d'épaisseur d2 est appliquée sur une couche déjà précédemment appliquée du matériau de construction, laquelle présente k zones solidifiées avec k épaisseurs de couche dj différentes, où $1 \leq j \leq k$ et k est un entier naturel supérieur à 1,
dans lequel pour chaque bande est effectuée une addition (B) des produits des extensions $x_j$ des zones j solidifiées dans cette bande dans la direction de déplacement (B) de l'enducteur (5, 15) et des épaisseurs de couche dj associées, et le maximum des valeurs ainsi établies par bande est utilisé en tant que maximum (MAX).

15. Dispositif de fabrication selon l'une des revendications 10 à 14, dans lequel, en vue d'établir l'extension d'une zone solidifiée d'une épaisseur déterminée dans la direction de déplacement (B) de l'enducteur (5, 15), est exécutée une sommation des extensions de régions partielles non continues de cette zone dans la direction de déplacement (B) de l'enducteur (5).

FIG.1

FIG. 2

## Fig. 3

Fig. 4a

Fig. 4b

Fig. 5

Fig. 6

Fig. 7

Fig. 8

**Fig. 9**

**Fig. 10**

**Fig. 11**

**Fig. 12**

**Fig. 13**

190a     190b

175

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011121568 A1
- DE 102007006478 A1